(19) Europäisches Patentamt
European Patent Office
Office européen des brevets

(11) **EP 4 574 905 A1**

(12) **EUROPEAN PATENT APPLICATION**
published in accordance with Art. 153(4) EPC

(43) Date of publication:
**25.06.2025 Bulletin 2025/26**

(21) Application number: **23854479.5**

(22) Date of filing: **17.08.2023**

(51) International Patent Classification (IPC):
***C08L 67/04*** *(2006.01)* ***C08G 63/02*** *(2006.01)*
***C08G 63/06*** *(2006.01)* ***C08G 63/08*** *(2006.01)*

(52) Cooperative Patent Classification (CPC):
**C08G 63/02; C08G 63/06; C08G 63/08; C08L 67/04**

(86) International application number:
**PCT/CN2023/113482**

(87) International publication number:
**WO 2024/037580 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.08.2022 CN 202211002667**
**19.08.2022 CN 202210997325**
**28.10.2022 CN 202211334639**

(71) Applicants:
- **China Petroleum & Chemical Corporation**
  **Beijing 100728 (CN)**
- **Sinopec (Shangai) Research Institute of Petrochemical Technology Co., Ltd.**
  **Shanghai 201208 (CN)**

(72) Inventors:
- **LUO, Jiawei**
  **Shanghai 201208 (CN)**
- **WANG, James Hongxue**
  **Shanghai 201208 (CN)**
- **ZHOU, Bing**
  **Shanghai 201208 (CN)**
- **TIAN, Yuchuan**
  **Shanghai 201208 (CN)**
- **JIA, Qin**
  **Shanghai 201208 (CN)**

(74) Representative: **karo IP**
**Patentanwälte PartG mbB**
**Steinstraße 16-18**
**40212 Düsseldorf (DE)**

(54) **POLYMER COMPOSITION AND PREPARATION METHOD THEREFOR, AND PRODUCT**

(57) The present invention provides a polymer composition comprising a polyester graft copolymer and a polyester homopolymer, wherein the molecular weight of the polyester graft copolymer is higher than the molecular weight of the polyester homopolymer, and wherein the polyester graft copolymer is represented by the following formula:

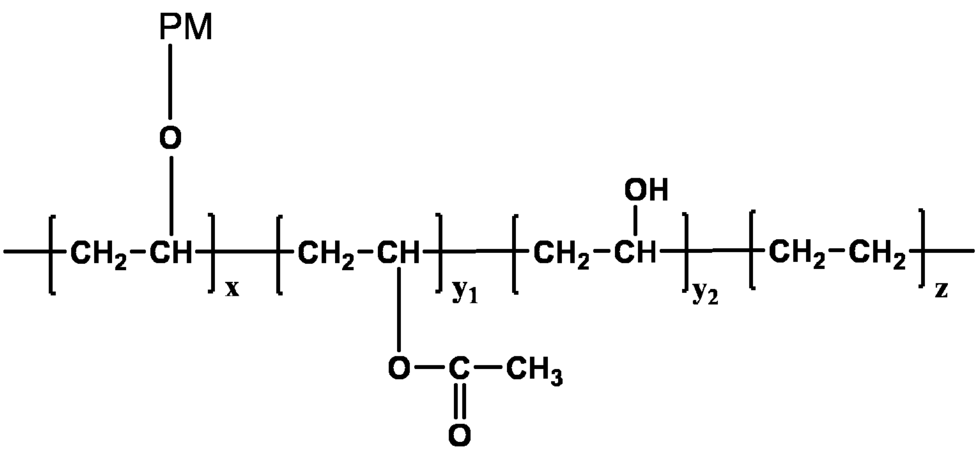

EP 4 574 905 A1

in the formula, x, $y_1$, $y_2$ and z each independently represent the degree of polymerization, PM represents a polyester chain and the degree of polymerization of the polyester chain is p, wherein x and p are each independently a number greater than zero, $y_1$, $y_2$ and z are each independently zero or a number greater than zero, wherein the polyester homopolymer and the polyester chains in the polyester graft copolymer are derived from the same monomer(s) for polyester. The present invention further provides a method for preparing the polymer composition and an article comprising the polymer composition.

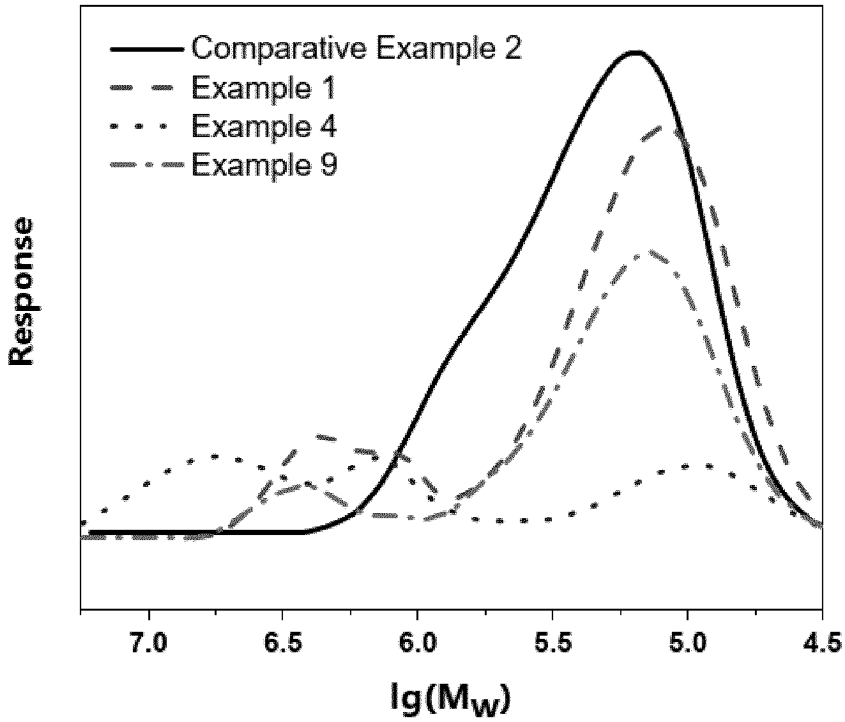


FIG.1

## Description

### Technical Field

The present invention relates to the field of polymers, and further relates to a polymer composition comprising a polyester graft copolymer and a polyester homopolymer, a preparation method thereof and an article comprising the same. More specifically, the present invention relates to a polyglycolic acid composition having a multimodal molecular weight distribution and a preparation method thereof.

### Backgrounds

Polyglycolic acid (PGA), also known as polyglycolide or polyhydroxyacetic acid, is a completely biodegradable material that can be completely degraded in 1 to 3 months under natural conditions. At the same time, polyglycolic acid has excellent mechanical properties, has strong barrier properties to $O_2$ and $CO_2$, and is non-toxic, harmless, green and environmentally friendly. It has been certified as a safely biodegradable plastic material in the United States, the European Union, and Japan.

However, on the one hand, polyglycolide has a poor toughness, with an elongation at break of only about 10% and a notched impact strength of less than 3 $kJ/m^2$; and on the other hand, the molecular weight of polyglycolide obtained by conventional preparation methods is still not high enough, the melt flow rate at processing temperature is too large and the melt strength is too low, making it difficult to meet the application requirements of film blowing, rod extrusion or the like that require a low melt flow rate. These shortcomings seriously limit the application of polyglycolide in the corresponding fields.

CN111647144A (Shanghai Pujing Chemical Technology Co., Ltd.) discloses a method for adjusting the molecular chain structure of polyglycolic acid, by adding some characteristic functional groups (hydrophilic/hydrophobic groups -OH, -COOR, etc.) or chain segments (branching, copolymerization, etc.) with special performance to change the molecular structure, so as to change the original molecular characteristics of polyglycolic acid. This invention mentions that a polyhydroxyl high-molecular polymer such as polyethylene glycol or starch can be used as a capping agent, and the polymer is a hydroxylated polymer with a characteristic functional group structure of multiple hydroxyl or carboxyl or mixed hydroxy and carboxyl (two or more) and a number average molecular weight of 2000 to 10,000 g/mol, and it is stated that a too large molecular weight will lead to a lower efficiency due to steric hindrance effect and a too long period. SAG (epoxy polymer) or polyethylene glycol or the like is added for capping 5 minutes (min) before the end of the reaction, and the final product has a low molecular weight (weight average molecular weight of up to about 200,000 g/mol), and a low intrinsic viscosity, with a maximum of about 1.45 dl/g. At the same time, the initiator in this patent document only plays a role in branching or blocking. In addition, the polymerization conditions thereof are low-temperature nitrogen protection reaction. The reaction conditions are harsh, and the reaction time is long, at least 50 minutes. The long reaction time will cause thermal decomposition or degradation of PGA to form by-products with color or odor, thereby significantly decreasing the quality of PGA products and limiting the scope of application.

CN112513133A (Shanghai Pujing Chemical Technology Co., Ltd.) relates to a novel polyglycolic acid. The polyglycolic acid in this patent is modified by isocyanate chain extension after polymerization, so that it has a melt strength of 5~30 cN at 230°C. However, on the one hand, isocyanate has a higher toxicity, and the biodegradability of the resulting polyglycolic acid is also decreased somewhat due to isocyanate modification. On the other hand, this method requires post-modification after polymerization, and the process steps are cumbersome. In addition, this patent also requires reaction under low-temperature nitrogen protection. The reaction conditions are harsh and the reaction time is long. The whole process requires at least 160 min.

In summary, there is a continuous demand, which cannot be met by existing technologies, in the art for solving the problem that polyglycolic acid has low molecular weight and unimodal molecular weight distribution and cannot have high melt strength and good processability at the same time. Therefore, how to improve melt strength while retaining good processability and to reduce its melt flow rate at processing temperature to better meet the application requirements of film blowing, rod extrusion and the like that require low melt flow rate is an urgent problem to be solved for polyglycolic acid materials.

### Summary of the invention

In one aspect, the present invention relates to a polymer composition comprising a polyester graft copolymer and a polyester homopolymer, wherein the molecular weight of the polyester graft copolymer is higher than the molecular weight of the polyester homopolymer, and wherein the polyester graft copolymer is represented by the following formula A:

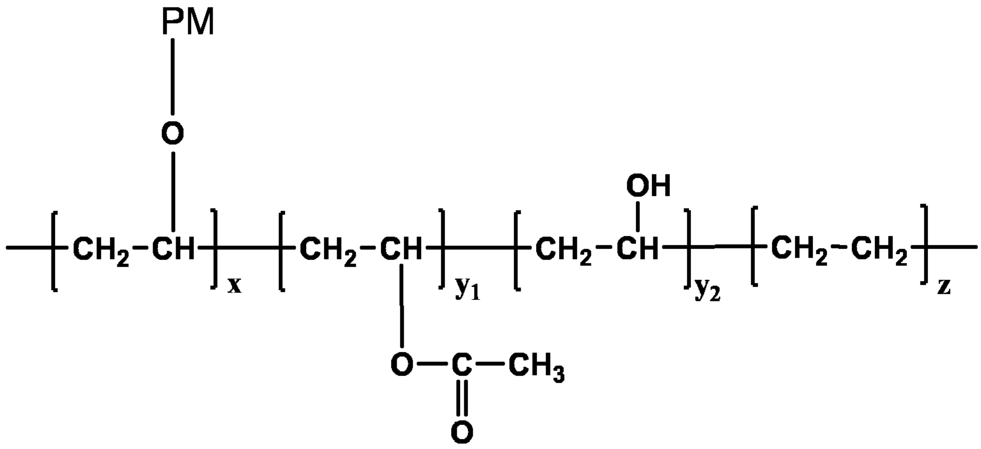

Formula A

in formula A, x, $y_1$, $y_2$ and z each independently represent the degree of polymerization, PM represents a polyester chain and the degree of polymerization of the polyester chain is p, wherein x and p each independently represent a number greater than zero, $y_1$, $y_2$ and z each independently represent zero or a number greater than zero, wherein the polyester homopolymer and the polyester chains in the polyester graft copolymer are derived from the same monomer(s) for polyester.

In some embodiments, for the polymer composition of the present invention, the sum of x, $y_1$, $y_2$ and z can be not less than 50, preferably 50-6000, more preferably 200-2500. In some embodiments, for the polymer composition of the present invention, p can be greater than or equal to 40, preferably greater than or equal to 50, more preferably 70-2000. In some embodiments, for the polymer composition of the present invention, the proportion of z to the sum of x + $y_1$ + $y_2$ + z can be 0% -50%. In some embodiments, for the polymer composition of the present invention, the proportion of $y_1$ to the sum of x + $y_1$ + $y_2$ can be 0%-32%.

In some embodiments, for the polymer compositions of the present invention, the polyester graft copolymer and the polyester homopolymer are formed in situ simultaneously.

In some embodiments, for the polymer composition of the present invention, the polyester homopolymer and the polyester chains in the polyester graft copolymer are derived from a hydroxy acid monomer or a derivative of a hydroxy acid monomer; preferably, the polyester homopolymer and the polyester chain in the polyester graft copolymer are derived from a lactide monomer, a lactone monomer or a combination thereof; preferably, the lactide monomer is a lactide monomer based on α-hydroxy acid or β-hydroxy acid, more preferably, the lactide monomer is selected from the group consisting of glycolide, lactide, butyrolactide, valerolactide, caprolactide and any combination thereof; preferably, the lactone monomer is selected from the group consisting of β-butyrolactone, δ-valerolactone, ε-caprolactone, β-propiolactone, β-valerolactone, γ-butyrolactone, γ-valerolactone, γ-octalactone, β-methyl-δ-valerolactone, δ-stearolactone, 2-methyl-ε-caprolactone, 4-methyl-ε-caprolactone, ε-octalactone, ε-palmitolactone and any combination thereof, more preferably the lactone monomer is selected from the group consisting of β-butyrolactone, δ-valerolactone, ε-caprolactone and any combination thereof; most preferably, the monomer is selected from the group consisting of methyl glycolate, glycolic acid, glycolide and any combination thereof.

In some embodiments, for the polymer composition of the present invention, when the polyester graft copolymer comprises a polyvinyl alcohol main chain, the amount of the polyvinyl alcohol main chain in the polyester graft copolymer is 0.001 to 5 parts by mass, preferably 0.005 to 3 parts by mass, preferably 0.005 to 1 part by mass, more preferably 0.01 to 1 part by mass, relative to 100 parts by mass of polyesters in the polyester graft copolymer and the polyester homopolymer; and/or, when the polyester graft copolymer comprises an ethylene-vinyl alcohol copolymer main chain, the amount of the ethylene-vinyl alcohol copolymer main chain in the polyester graft copolymer is 0.001 to 10 parts by mass, preferably 0.002 to 8 parts by mass, preferably 0.005 to 7 parts by mass, more preferably 0.01 to 5 parts by mass, relative to 100 parts by mass of polyesters in the polyester graft copolymer and the polyester homopolymer.

In some embodiments, for the polymer composition of the present invention, relative to the total mass of the polyester graft copolymer and the polyester homopolymer, the content of the polyester graft copolymer can be 0.1 mass% to 80.0 mass%, preferably 0.5 mass% to 55.0 mass%, more preferably 1.0 mass% to 30.0 mass%; and the content of the polyester homopolymer can be 20 mass% to 99.9 mass%, preferably 45.0 mass% to 99.5 mass%, more preferably 70.0 mass% to 99.0 mass%.

In some embodiments, for the polymer composition of the present invention, the overall weight average molecular weight of the polymer composition can be 180,000 to 1,500,000 g/mol, preferably 200,000 to 1,500,000 g/mol, more preferably 250,000 to 500,000 g/mol. In some embodiments, for the polymer composition of the present invention

invention, the overall molecular weight polydispersity index of the polymer composition can be 1.5 to 20.0, preferably 2.0 to 12.0, preferably 2.0 to 6.0, and more preferably 2.0 to 3.5. In some embodiments, for the polymer composition of the present invention, the number of peaks in the molecular weight distribution of the polymer composition can be at least 2, preferably 2 to 4, for example 2, 3 or 4.

In some embodiments, for the polymer composition of the present invention, the weight average molecular weight of the polyester graft copolymer can be 500,000 to 10,000,000 g/mol, preferably can be 1,000,000 to 6,000,000 g/mol. In some embodiments, for the polymer composition of the present invention, the molecular weight polydispersity index of the polyester graft copolymer can be 1.0 to 3.0, preferably can be 1.1 to 1.5. In some embodiments, for the polymer composition of the present invention, the weight average molecular weight of the polyester homopolymer can be 50,000 to 350,000 g/mol, preferably can be 100,000 to 200,000 g/mol. In some embodiments, for the polymer composition of the present invention, the molecular weight polydispersity index of the polyester homopolymer is 1.0 to 3.0, preferably 1.4 to 2.9.

The present invention provides a polyglycolic acid composition to solve the problems in the prior art that the polyglycolic acid has a low molecular weight and a unimodal molecular weight distribution and cannot have both high melt strength and good processability, as well as the problems that the slow polymerization reaction of polyglycolic acid causes high production costs and energy consumption and the polyglycolic acid articles have poor toughness and cannot meet article application requirements.

In another aspect, therefore, the present invention relates to a polymer composition comprising a polyester graft copolymer and a polyester homopolymer, wherein the polyester graft copolymer is polyglycolic acid graft copolymer and the polyester homopolymer is polyglycolic acid homopolymer. In this case, the polymer composition of the present invention can be referred to as polyglycolic acid composition. In some embodiments, the molecular weight distribution of the polymer composition is multimodal. In the present invention, the molecular weight of the polyglycolic acid graft copolymer is higher than the molecular weight of the polyglycolic acid homopolymer. In the present invention, the polyglycolic acid graft copolymer and the polyglycolic acid homopolymer are formed in situ simultaneously.

In the present invention, when comparing the molecular weights of the polyester graft copolymer, such as the polyglycolic acid graft copolymer, and the polyester homopolymer, such as the polyglycolic acid homopolymer, the same type of molecular weight is used, such as weight average molecular weight $M_w$ Vs. weight average molecular weight $M_w$, or number average molecular weight $M_n$ Vs. number average molecular weight $M_n$.

In some embodiments, the polyester graft copolymer is a polyglycolic acid graft copolymer and the polyester homopolymer is a polyglycolic acid homopolymer; wherein the polyglycolic acid graft copolymer is represented by formula (I):

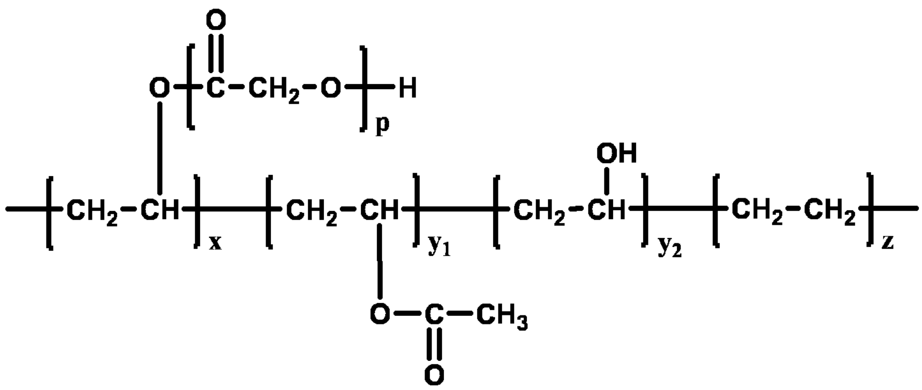

Formula (I);

in formula (I), x, $y_1$, $y_2$, z and p each independently represent degree of polymerization, wherein x and p each independently represent a number greater than zero, and $y_1$, $y_2$ and z each independently represent zero or a number greater than zero.

In some embodiments, the sum of x, $y_1$, $y_2$ and z can be not less than 50, preferably 50-6000, more preferably 200-2500. In some embodiments, p can be not less than 40, preferably not less than 50, more preferably 70-2000. In some embodiments, the proportion of z to the sum of x + $y_1$ + $y_2$ +z can be 0% -50%. In some embodiments, the proportion of $y_1$ to the sum of x+ $y_1$ + $y_2$ can be 0% -32%.

In some embodiments, the polyglycolic acid homopolymer is represented by formula (II):

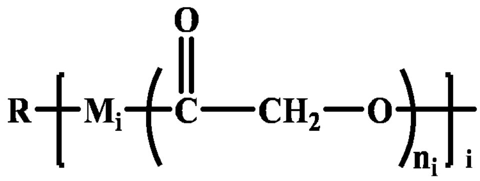

Formula (II);

in formula (II), $n_1$, ......, $n_i$ are each the degree of polymerization; i is the number of

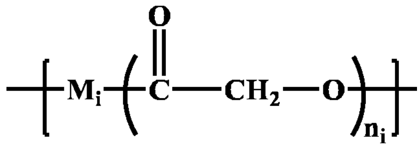

directly connected to R, i ≥ 1; $M_i$ is imino group (-NH-), nitrilo group

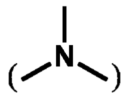

or ether bond (-O-); R is at least one of hydrogen, an aliphatic group or an aromatic group; when i > 1, $M_1$, $M_2$,..., $M_i$ are different from or the same as each other, and $n_1$, $n_2$, ..., $n_i$ are different from or the same as each other.

In some embodiments, i can be any integer between 1 and 20, and the preferred range of i is 1 to 6; the sum of all n values is 100 to 5000, preferably 1000 to 4000; R is hydrogen and/or an alkyl or aromatic hydrocarbon group having a molecular weight of 14 to 1000 g/mol.

In some embodiments, relative to 100 parts by mass of the polyglycolic acid segment

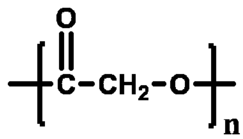

,

the polymer composition contains:

when the polyglycolic acid graft copolymer contains a polyvinyl alcohol main chain, 0.001 to 5 parts by mass, preferably 0.005 to 3 parts by mass, preferably 0.005 to 1 part by mass, more preferably 0.01 to 1 part by mass of

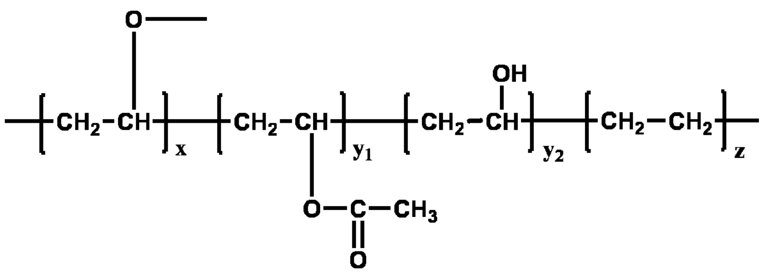

,

and/or when the polyglycolic acid graft copolymer contains an ethylene-vinyl alcohol copolymer main chain, 0.001 to 10 parts by mass, preferably 0.002 to 8 parts by mass, preferably 0.005 to 7 parts by mass, more preferably 0.01 to 5 parts by mass of

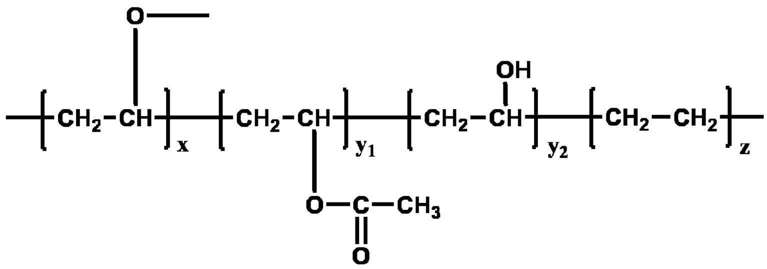

,

and

0.001 to 1 part by mass, preferably 0.01 to 0.1 parts by mass of

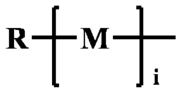

.

In some embodiments, the overall weight average molecular weight of the polymer composition is 180,000 to 1,500,000 g/mol, preferably 200,000 to 1,500,000 g/mol, more preferably 250,000 to 500,000 g/mol. In some embodiments, the overall molecular weight polydispersity index of the polymer composition is 1.5 to 20.0, preferably 2.0 to 12.0, preferably 2.0 to 6.0, more preferably 2.0 to 3.5. In some embodiments, the peak number of the molecular weight distribution of the polymer composition is at least 2, preferably 2, 3 or 4.

In some embodiments, the weight average molecular weight of the polyglycolic acid graft copolymer is 500,000 to 10,000,000 g/mol, preferably 1,000,000 to 6,000,000 g/mol. In some embodiments, the molecular weight polydispersity index of the polyglycolic acid graft copolymer is 1.0 to 3.0, preferably 1.1 to 1.5. In some embodiments, the weight average molecular weight of the polyglycolic acid homopolymer is 50,000 to 350,000 g/mol, preferably 100,000 to 200,000 g/mol. In some embodiments, the molecular weight polydispersity index of the polyglycolic acid homopolymer is 1.0 to 3.0, preferably 1.4 to 2.9.

In some embodiments, relative to the total mass of the polymer composition, the content of the polyglycolic acid graft copolymer is 0.1 mass% to 80.0 mass%, preferably 0.5 mass% to 55.0 mass%, and more preferably 1.0 mass% to 30.0 mass%; and the content of the polyglycolic acid homopolymer is 20 mass% to 99.9 mass%, preferably 45.0 mass% to 99.5 mass%, and more preferably 70.0 mass% to 99.0 mass%. In some embodiments, the melt flow rate of the polymer composition at 230°C/2.16 kg is not higher than 20.0 g/10 min, preferably 0.5 to 10.0 g/10 min.

Another aspect of the present invention relates to a preparation method for the polymer composition of the present invention, such as a preparation method for the polymer composition disclosed in the above aspect. The preparation method comprises melt polymerizing a monomer for polyester, a macromolecular initiator and a small molecule initiator to provide the polymer composition.

In some embodiments, the monomer is selected from a hydroxy acid monomer or a derivative of a hydroxy acid monomer; preferably, the monomer is selected from the group consisting of a lactide monomer, a lactone monomer or a combination thereof; preferably, the lactide monomer is a lactide monomer based on α-hydroxy acid or β-hydroxy acid, more preferably the lactide monomer is selected from the group consisting of glycolide, lactide, butyrolactide, valerolactide, caprolactide and any combination thereof; preferably, the lactone monomer is selected from the group consisting of β-butyrolactone, δ-valerolactone, ε-caprolactone, β-propiolactone, β-valerolactone, γ-butyrolactone, γ-valerolactone, γ-octalactone, β-methyl-δ-valerolactone, δ-stearolactone, 2-methyl-ε-caprolactone, 4-methyl-ε-caprolactone, ε-octalactone, ε-palmitolactone and any combination thereof, more preferably the lactone monomer is selected from the group consisting of β-butyrolactone, δ-valerolactone, ε-caprolactone and any combination thereof; most preferably, the monomer is selected from the group consisting of methyl glycolate, glycolic acid, glycolide and any combination thereof; and/or, the macromolecular initiator is at least one of polyvinyl alcohol and ethylene-vinyl alcohol copolymer.

In some embodiments, the alcoholysis degree of the polyvinyl alcohol is 68% to 99%, and/or the degree of polymerization of the polyvinyl alcohol is 100-6000, preferably 300-2000. In some embodiments, the content of ethylene segments in the ethylene-vinyl alcohol copolymer is greater than 0 mol% to 50 mol%. In some embodiments, the degree of polymerization of the ethylene-vinyl alcohol copolymer is 50-6000, preferably 300-2000. In some embodiments, the melt flow rate of the ethylene-vinyl alcohol copolymer at 190°C/2.16 kg is 0.1-50.0 g/10 min.

In some embodiments, the small molecule initiator is selected from the group consisting of water and/or a hydroxyl and/or amino group-containing small molecule compound with a boiling point greater than 160°C, preferably, the molecular weight of the hydroxyl and/or amino group-containing small molecule compound is not greater than 1000 g/mol; preferably 60-300 g/mol.

In some embodiments, calculated as hydroxyl and relative to each gram of monomer, the content of hydroxyl contained in the macromolecular initiator is 0.1 μmol/g monomer to 1.5 mmol/g monomer, preferably 0.5 μmol/g monomer to 1.0 mmol/g monomer, more preferably 1.0 μmol/g monomer to 0.5 mmol/g monomer.

In some embodiments, calculated as active hydrogen and relative to each gram of monomer, the content of active hydrogen contained in the small molecule initiator is 3.0 μmol/g monomer to 40.0 μmol/g monomer, preferably 10.0 μmol/g monomer to 30.0 μmol/g monomer.

In some embodiments, calculated as active hydrogen and relative to each gram of monomer, the total content of active hydrogen contained in the macromolecular initiator and the small molecule initiator is 3.1 μmol/g monomer to 1.54 mmol/g monomer, preferably 10.5 μmol/g monomer to 1.03 mmol/g monomer, and more preferably 11.0 μmol/g monomer to 530.0 μmol/g monomer.

In the present application, "active hydrogen" refers to hydrogen contained in water, hydroxyl (-OH), primary amino ($-NH_2$) and secondary amino (-NH-). According to the present invention, each water molecule contains one "active hydrogen".

In some embodiments, the amount of the macromolecular initiator used relative to 100 parts by mass of the monomer is, when the macromolecular initiator is polyvinyl alcohol, 0.001 to 5 parts by mass, preferably 0.005 to 3 parts by mass, preferably 0.005 to 1 part by mass, more preferably 0.01 to 1 part by mass, and/or when the macromolecular initiator is ethylene-vinyl alcohol copolymer, 0.001 to 10 parts by mass, preferably 0.002 to 8 parts by mass, preferably 0.005 to 7 parts by mass, more preferably 0.01 to 5 parts by mass. In some embodiments, the amount of the small molecule initiator used is 0.001 to 1 part by mass, preferably 0.01 to 0.1 part by mass, relative to 100 parts by mass of the monomer.

In some embodiments, the conditions of the melt polymerization include: a temperature of 120 to 300°C, preferably 160 to 250°C, more preferably 200 to 240°C; and/or a reaction time of 0.5 to 60 min, preferably 1 to 10 min.

In some embodiments, the melt polymerization reaction is carried out in a melt mixing device. In some embodiments, the melt polymerization reaction is carried out in a continuous twin-screw extruding equipment. In some embodiments, the polymerization reaction conditions of the continuous twin-screw extruding equipment include: a temperature of 180 to 250°C, preferably 210 to 240°C; and/or a screw rotation speed of 5 to 300 rpm, preferably 40 to 150 rpm; and/or a length to diameter ratio of 25 to 80, preferably 40 to 70.

In some embodiments, the melt polymerization reaction is carried out in at least two, for example, 2, 3 or 4, twin-screw extruding equipments connected in series. In some embodiments, the polymerization reaction conditions of each twin-screw extruding equipment connected in series include: a temperature of 180-250°C, preferably 210-240 °C; and/or a screw rotation speed of 5-300 rpm, preferably 40-150 rpm; and/or a length to diameter ratio of 25-80, preferably 40-70.

In some embodiments, the melt polymerization is carried out in the presence of a catalyst and an optional antioxidant. In some embodiments, the catalyst is a salt compound of at least one of Group IIA to VA metal elements and transition metal elements or an organic guanidine catalyst. In some embodiments, the catalyst is a salt compound of at least one of Sn, Bi, Mg, Al, Ca, Fe, Mn, Ti and Zn, and further preferably a Sn salt.

In some embodiments, the amount of the catalyst used is 0.005 to 1 part by mass, preferably 0.01 to 0.2 parts by mass, relative to 100 parts by mass of the monomer. In some embodiments, the amount of the antioxidant used is 0 to 2 parts by mass, preferably 0.01 to 1 part by mass, relative to 100 parts by mass of the monomer.

Another aspect of the present invention relates to a polymer composition prepared by the preparation method of the present invention.

A further aspect of the present invention relates to an article comprising the polymer composition of the present invention. In some embodiments, the article is selected from the group consisting of films, rods, tubes, wires, sheets, irregularly shaped parts, and any combination thereof.

In some embodiments, the article is a film. In some embodiments, the film is a multilayer composite film, wherein at least one layer of the multilayer composite film comprises a polymer composition of the present invention.

**Description of Drawings**

Figure 1 is the GPC curves of Examples 1, 4 and 9 and Comparative Example 2. As can be seen from Figure 1, conventional commercially available PGA (Comparative Example 2) has a unimodal molecular weight distribution, with a peak molecular weight $M_p$ less than 500,000 g/mol (i.e., $lg(M_w)$ of the peak in the figure is less than 5.7), while Examples 1, 4 and Example 9 have a multimodal molecular weight distribution, with not only a peak with a peak molecular weight $M_p$ less than 500,000 g/mol (i.e., polyglycolic acid homopolymer), but also a peak with a peak molecular weight $M_p$ greater than 500,000 g/mol (i.e., polyglycolic acid graft copolymer).

Figure 2 is the tensile stress-strain curves of the tensile test of the injection molded specimens of Examples 1, 3 and 9 and Comparative Example 2. As can be seen from Figure 2, the elongations at break of the inventive Examples are significantly higher than that of Comparative Example 2 (commercially available PGA) while maintaining relatively

high strength and modulus, that is, the toughness is significantly improved.

Figure 3 shows the melt strength test results of Examples 1 and 9 and Comparative Example 2. As can be seen from Figure 3, the melt strength of Example 1 at 230°C is significantly higher than that of Comparative Example 2 (commercially available PGA), up to about 20 cN, while the melt strength of Comparative Example 2 is less than 1 cN.

Figure 4 is a schematic diagram of a multilayer co-extrusion film blowing preparation device with a uniaxial stretching device. In the figure, 10a, 10b, and 10c are hoppers; 20a, 20b, and 20c are extruders; 30a, 30b, and 30c are melt pumps; 40a is a feed pipe; 40b is a co-extrusion distributor; 50a is a film blowing die; 50b is an air ring; 60 is a collapsing frame; 70a is clamping rollers; 80 is a uniaxial stretching device; 90 is a winding roller; 01a is a film bubble; 01b is a precursor film; and 01c is a film after stretching. The outer protective layer material, the tie layer material, and the barrier layer material (the polymer composition of the present invention, such as polyglycolic acid composition) are added into the hoppers 10a, 10b, and 10c, respectively.

Figure 5 is a schematic diagram of a multilayer co-extrusion casting film preparation device with a uniaxial stretching device. In the figure, 10a, 10b, 10c are hoppers; 20a, 20b, 20c are extruders; 30a, 30b, 30c are melt pumps; 40a is a feed pipe; 40b is a co-extrusion distributor; 50c is a casting die; 70b is a cooling roller; 80 is a uniaxial stretching device; 90 is a winding roller; 01b is a precursor film; and 01c is a film after stretching.

Figure 6 is a schematic diagram of the structure of a multilayer composite film according to an embodiment of the present invention.

Figure 7 is an optical microscope photo of Example A2. As shown in Figure 7, the left and right sides of the figure are metal sample holders, and the middle is a cross section of a multilayer film. The magnification of the photo is 400 times. As can be seen from the figure, the film is a 5-layer composite film: the lighter color layer at the middle is polyglycolic acid composition barrier layer, with a thickness of about 15 μm, the outermost layers, which have lighter color and have white reflections, are polyethyene protective layers with a single-layer thickness of about 20 μm, and the darker coloar layers between the barrier layer and the protective layers are tie layers with a single-layer thickness of about 15 μm.

Figure 8 is a scanning electron micrograph photo of the cross section of Comparative Example 4 (blended composition), with a magnification of 200 times. The cross section is relatively smooth, belonging to brittle fracture, and has defects caused by large bubbles.

Figure 9 is a scanning electron micrograph photo of the cross section of Example 8 (in-situ synthesized composition), with a magnification of 200 times. The cross section is relatively rough, belonging to ductile fracture, and has no obvious defects.

## Detailed Description

The present invention provides a polymer composition comprising a polyester graft copolymer and a polyester homopolymer. The present invention surprisingly found that by combining the polyester graft copolymer and the polyester homopolymer of the present invention, a composition that can overcome one or more of the above-mentioned problems in the prior art can be provided.

The polyester graft copolymer of the present invention is a polyester graft copolymer obtained by grafting polyester chains onto polyvinyl alcohol and/or ethylene-vinyl alcohol copolymer main chain. The polyester graft copolymer can be represented by the following formula A:

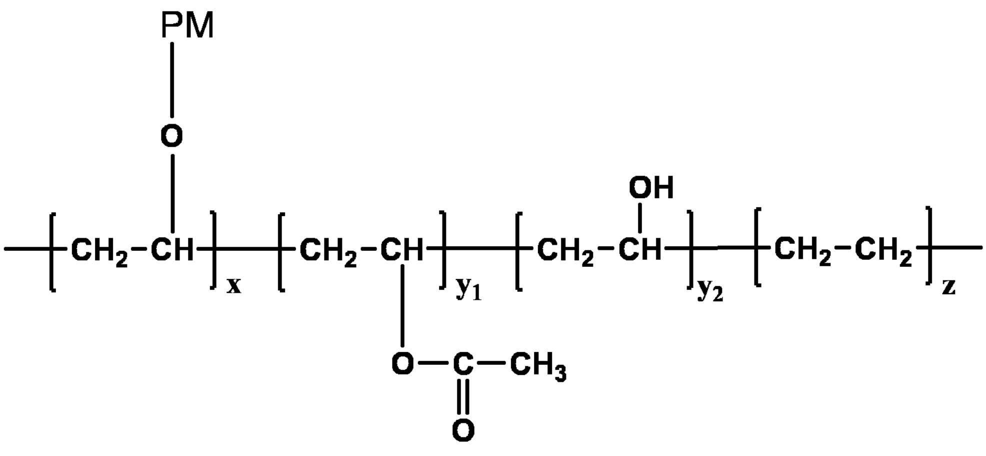

Formula A

in formula A, x, $y_1$, $y_2$ and z each independently represent the degree of polymerization, PM represents a polyester chain

and the degree of polymerization of the polyester chain is p, wherein x and p are each independently a number greater than zero, $y_1$, $y_2$ and z are each independently zero or a number greater than zero, wherein the polyester homopolymer and the polyester chains in the polyester graft copolymer are derived from the same monomer(s) for polyester.

In the present invention, the phrase "the polyester homopolymer and the polyester chains in the polyester graft copolymer being derived from the same monomer(s) for polyester" means that the polyester homopolymer and the polyester chains in the polyester graft copolymer are obtained by polymerizing the same polyester monomer or the same mixture of polyester monomers.

For the polymer composition of the present invention, the polyester chains in the polyester graft copolymer and the polyester homopolymer are derived from a hydroxy acid monomer or a derivative of a hydroxy acid monomer. In some embodiments, the polyester chains in the polyester graft copolymer and the polyester homopolymer can be derived from a lactide monomer, a lactone monomer or a combination thereof. The lactide monomer can be a lactide monomer based on an α-hydroxy acid or a β-hydroxy acid; preferably, the lactide monomer is selected from the group consisting of glycolide, lactide, butyrolactide, valerolactide, caprolactide and any combination thereof. Preferably, the lactone monomer can be selected from the group consisting of β-butyrolactone, δ-valerolactone, ε-caprolactone, β-propiolactone, β-valerolactone, γ-butyrolactone, γ-valerolactone, γ-octalactone, β-methyl-δ-valerolactone, δ-stearolactone, 2-methyl-ε-caprolactone, 4-methyl-ε-caprolactone, ε-octalactone, ε-palmitolactone and any combination thereof, more preferably the lactone monomer is selected from the group consisting of β-butyrolactone, δ-valerolactone, ε-caprolactone and any combination thereof. Most preferably, the monomer is selected from the group consisting of methyl glycolate, glycolic acid, glycolide and any combination thereof.

In some embodiments, the present invention provides a polyglycolic acid composition having a multimodal molecular weight distribution and comprising a higher molecular weight polyglycolic acid graft copolymer (polyester graft copolymer) and a lower molecular weight polyglycolic acid homopolymer (polyester homopolymer). In these embodiments, the polyglycolic acid graft copolymer is a polyester graft copolymer obtained by grafting polyglycolic acid chains onto polyvinyl alcohol and/or ethylene-vinyl alcohol copolymer main chain. The polyglycolic acid graft copolymer can be represented by the following formula (I):

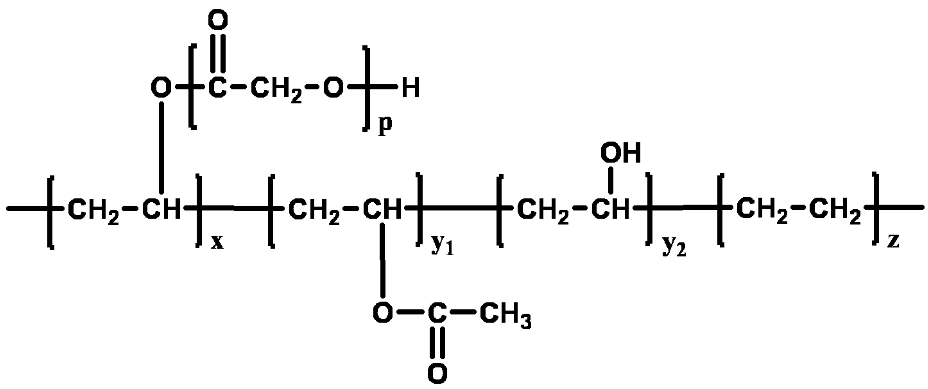

Formula (I);

in formula (I), x, $y_1$, $y_2$, z and p each independently represent the degree of polymerization, wherein x and p are each independently a number greater than zero, and $y_1$, $y_2$ and z are each independently zero or a number greater than zero.

As understood by those skilled in the art, in the polymer composition of the present invention, when the polyester chains in the polyester graft copolymer are polyglycolic acid chains and the polyester homopolymer is a polyglycolic acid homopolymer, the polymer composition of the present invention is a polyglycolic acid composition.

In the present invention, polyvinyl alcohol and/or ethylene-vinyl alcohol copolymer is referred to as a macromolecular initiator.

In formula (A) or formula (I), the sum of x, $y_1$, $y_2$ and z can be not less than 50, preferably 50-6000, more preferably 200-2500, and/or p is not less than 40, preferably not less than 50, more preferably 70-2000, and/or the proportion of z to the sum of x + $y_1$ + $y_2$ + z is 0% -50%, and/or the proportion of $y_1$ to the sum of x + $y_1$ + $y_2$ is 0% -32%.

In some embodiments, the sum of x, $y_1$, $y_2$ and z is not less than 50, not less than 60, not less than 70, not less than 80, not less than 90, not less than 100, not less than 110, not less than 120, not less than 130, not less than 140, not less than 150, not less than 160, not less than 170, not less than 180, not less than 190, not less than 200, not less than 210, not less than 220, not less than 230, not less than 240, not less than 250, not less than 260, not less than 270, not less than 280, not less than 290, not less than 300, not less than 310, not less than 320, not less than 330, not less than 340, not less than 350, not less than 360, not less than 370, not less than 380, not less than 390, or not less than 400, and not more than 8000, not more than 7500, not more than 7000, not more than 6500, not more than 6000, not more than 5500, not more than 5000, not more than 4500, not more than 4000, not more than 3500, not more than 3000, not more than 2500, not more than 2400,

not more than 2300, not more than 2200, not more than 2100, not more than 2000, not more than 1900, not more than 1800, not more than 1700, not more than 1600, not more than 1500, not more than 1400, not more than 1300, not more than 1200, not more than 1100, not more than 1000, not more than 900, not more than 800, not more than 700, or not more than 600.

In some embodiments, when the main chain of the polyester graft copolymer or the polyglycolic acid graft copolymer is ethylene-vinyl alcohol copolymer, the proportion of z to the sum of $x+y_1+y_2+z$ can be 1% to 50%, preferably 20% to 45%, and the proportion of $y_1$ to the sum of $x+y_1+y_Z$ can be 0.1%-6.0%. In some embodiments, the proportion of z to the sum of $x+y_1+y_2+z$ can be 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49% or 50%. In some embodiments, the proportion of $y_1$ to the sum of $x+y_1+y_2$ can be 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, 5.1%, 5.2%, 5.3%, 5.4%, 5.5%, 5.6%, 5.7%, 5.8%, 5.9% or 6.0%.

In some embodiments, when the main chain of the polyester graft copolymer or the polyglycolic acid graft copolymer is polyvinyl alcohol, z is 0, and the proportion of $y_1$ to the sum of $x+y_1+y_2$ can be 1% to 32%. In some embodiments, the proportion of $y_1$ to the sum of $x+y_1+y_2$ can be 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31% or 32%.

The sum of $x+y_1+y_2+z$ is the (total) degree of polymerization of polyvinyl alcohol or ethylene-vinyl alcohol copolymer. As known to those skilled in the art, the degree of polymerization can be obtained by information such as the number average molecular weight of polyvinyl alcohol or ethylene-vinyl alcohol copolymer and the alcoholysis degree of the raw material; and the proportion of z to the sum of $x+y_1+y_2+z$ is ethylene content, which is usually a known parameter of the raw material product and can also be calculated by the integrated area of the corresponding characteristic peak of the nuclear magnetic resonance hydrogen spectrum.

For polyvinyl alcohol, the proportion of $x+ y_2$ to the sum of $x+ y_1 + y_2$ is the alcoholysis degree of polyvinyl alcohol. For ethylene-vinyl alcohol copolymer, the proportion of $x + y_2$ to the sum of $x+ y_1 + y_2$ is the alcoholysis degree of ethylene-vinyl alcohol copolymer. The alcoholysis degree is usually a known parameter of the raw material product, but can also be measured by nuclear magnetic resonance, infrared, near infrared and other testing methods.

The degree of polymerization of the polyester chain of the polyester graft copolymer or the polyglycolic acid chains of the polyglycolic acid graft copolymer is p. According to the present invention, p can be greater than or equal to 40, preferably p is greater than or equal to 50, and p is less than or equal to 3,000, preferably less than or equal to 2,000, preferably less than or equal to 1,000.

The value of P can be calculated by the following formula (a):

$$p = (M_2\text{-}M_0)/(x^*M_m) \qquad \text{(a)}$$

in the above formula (a), $M_2$ and $M_0$ are the number average molecular weight of the polyester graft copolymer and the number average molecular weight of the macromolecular initiator, respectively, in g/mol; x is the degree of polymerization in formula A or formula (I), and its value can be determined by a testing method such as nuclear magnetic resonance testing method; $M_m$ is the molecular weight of polyester repeating unit, for example, when the monomer is glycolide, $M_m$ is 58 g/mol.

Alternatively, the lower limit of the value of p can be calculated by the following formula (b):

$$p > (M_2\text{-}M_0)/[(x+y_2)^*M_m] \qquad \text{(b)}$$

in the above formula (b), $M_2$, $M_0$ and $M_m$ are as described above for formula (a); $x + y_2$ is the degree of polymerization of the hydroxyl-containing repeating units in the macromolecular initiator, and its value can be calculated from the alcoholysis degree, ethylene content and the total degree of polymerization, wherein the calculation manner is: alcoholysis degree * (1-ethylene content) * total degree of polymerization.

Alternatively, the value of p can be obtained in the following manner: obtaining the polymer composition, fully hydrolyzing the polymer composition (i.e., completely hydrolyzing polyester chains into small molecules), recovering the macromolecular initiator and characterizing its structure, and then obtaining the value of p according to the manner disclosed in the present invention.

For example, the polymer composition can be added in water at 60-80°C until it is fully hydrolyzed (i.e., the polyester chains are completely hydrolyzed into small molecules), and then water is removed by reduced pressure distillation, vacuum freeze-drying, physical adsorption or the like; the residue is dissolved with a solvent such as dimethyl sulfoxide, and then the macromolecular initiator is separated (for example, by chromatography, etc.) and its structure is characterized; the number average molecular weight and hydroxyl content ($x+y_2$ value) of the macromolecular initiator are

obtained, and the value of p is obtained according to the manner disclosed in the present invention.

In the examples according to the present invention, the p values in the obtained polymers calculated by formula (b) are all greater than 40.

The polymer composition of the present invention, such as the polyglycolic acid composition, when subjected to GPC measurement, provides a GPC curve featured by a multimodal molecular weight distribution, indicating that it contains at least two polymer components with different molecular weights. When the GPC curve has a bimodal molecular weight distribution, the peak with higher molecular weight is the polyester graft copolymer, such as polyglycolic acid graft copolymer, and the peak with lower molecular weight peak is the polyester homopolymer, such as polyglycolic acid homopolymer.

When the polymer composition comprising the polyester graft copolymer and the polyester homopolymer of the present invention is a polyglycolic acid composition comprising a polyglycolic acid graft copolymer (polyester graft copolymer) and a polyglycolic acid homopolymer (polyester homopolymer), the polyglycolic acid homopolymer is represented by formula (II):

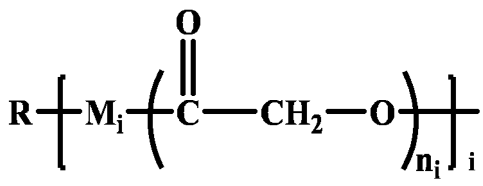

Formula (II);

wherein in formula (II), $n_1$, ......, $n_i$ are degree of polymerization; i is the number of

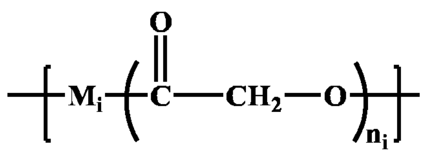

directly connected to R, i ≥ 1; $M_i$ is imino group (-NH-), nitrilo group

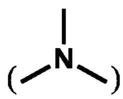

or ether bond (-O-); R is at least one of hydrogen, an aliphatic group or an aromatic group; when i > 1, $M_1$, $M_2$,..., $M_i$ are different from or the same as each other, and $n_1$, $n_2$, ..., $n_i$ are different from or the same as each other. In some embodiments, when i=1, R can be hydrogen atom or a hydrocarbyl group.

According to the present invention, preferably, the range of the integer i can be from 1 to 20, and the preferred range of interge i can be 1 to 6, for example, i can be 1, 2, 3, 4, 5 or 6. In some embodiments, the sum of all n values ($n_1$+$n_2$ +......+$n_i$) is 100 to 5000, preferably 1000 to 4000; R is hydrogen and/or an alkyl or aromatic hydrocarbon group having a molecular weight of 14 to 1000 g/mol.

According to the present invention, the sum of n values in formula (II) is the degree of polymerization. In some embodiments of the present invention, the sum of all n values in formula (II) is between 1000 and 4000.

According to the present invention, the sum of all n values can be obtained by dividing the GPC measured number average molecular weight of the polyester homopolymer, such as polyglycolic acid homopolymer, by the molecular weight of the repeating unit.

According to the present invention, the degree of polymerization (x, $y_1$, $y_2$, z, p and n) obtained by calculation is an average value, which is rounded off during calculation.

According to the present invention, in the polymer composition of the present invention comprising the polyester graft copolymer and the polyester homopolymer, relative to 100 parts by mass of polyesters in the polyester graft copolymer and in the polyester homopolymer (i.e., the parts by mass of the polyester homopolymer + the parts by mass of the polyester chains in the polyester graft copolymer), when the polyester graft copolymer comprises polyvinyl alcohol main chain, the amount of the polyvinyl alcohol main chain in the polyester graft copolymer is 0.001 to 5 parts by mass, preferably 0.005 to 3 parts by mass, preferably 0.005 to 1 part by mass, and more preferably 0.01 to 1 part by mass; and/or, when the polyester graft copolymer comprises ethylene-vinyl alcohol copolymer main chain, the amount of the ethylene-vinyl alcohol copolymer main chain in the polyester graft copolymer is 0.001 to 10 parts by mass, preferably 0.002 to 8 parts

by mass, preferably 0.005 to 7 parts by mass, and more preferably 0.01 to 5 parts by mass.

In some embodiments, in the polymer composition of the present invention comprising the polyester graft copolymer and the polyester homopolymer, relative to 100 parts by mass of polyesters in the polyester graft copolymer and in the polyester homopolymer (i.e., parts by mass of the polyester homopolymer + parts by mass of the polyester chains in the polyester graft copolymer), when the polyester graft copolymer comprises polyvinyl alcohol main chain, the amount (parts by mass) of the polyvinyl alcohol main chain in the polyester graft copolymer can be 0.001 parts, 0.002 parts, 0.003 parts, 0.004 parts, 0.005 parts, 0.006 parts, 0.007 parts, 0.008 parts, 0.009 parts, 0.010 parts, 0.011 parts, 0.012 parts, 0.013 parts, 0.014 parts, 0.015 parts, 0.016 parts, 0.017 parts, 0.018 parts, 0.019 parts, 0.020 parts, 0.021 parts, 0.022 parts, 0.023 parts, 0.024 parts, 0.025 parts, 0.026 parts, 0.027 parts, 0.028 parts, 0.029 parts, 0.030 parts, 0.035 part, 0.040 parts, 0.050 parts, 0.060 parts, 0.070 parts, 0.080 parts, 0.090 parts, 0.10 parts, 0.11 parts, 0.12 parts, 0.13 parts, 0.14 parts, 0.15 parts, 0.16 parts, 0.17 parts, 0.18 parts, 0.19 parts, 0.20 parts, 0.30 parts, 0.40 parts, 0.50 parts, 0.60 parts, 0.70 parts, 0.80 parts, 0.90 parts, 1.0 part, 1.5 parts, 2.0 parts, 2.5 parts, 3.0 parts, 3.5 parts, 4.0 parts, 4.5 parts or 5.0 parts. In some embodiments, in the polymer composition of the present invention comprising the polyester graft copolymer and the polyester homopolymer, relative to 100 parts by mass of polyestesr in the polyester graft copolymer and in the polyester homopolymer (i.e., parts by mass of the polyester homopolymer + parts by mass of the polyester chains in the polyester graft copolymer), when the polyester graft copolymer comprises ethylene-vinyl alcohol copolymer main chain, the amount (parts by mass) of the ethylene-vinyl alcohol copolymer main chain in the polyester graft copolymer can be 0.001 parts, 0.002 parts, 0.003 parts, 0.004 parts, 0.005 parts, 0.006 parts, 0.007 parts, 0.008 parts, 0.009 parts, 0.010 parts, 0.011 parts, 0.012 parts, 0.013 parts, 0.014 parts, 0.015 parts, 0.016 part, 0.017 parts, 0.018 parts, 0.019 parts, 0.020 parts, 0.021 parts, 0.022 parts, 0.023 parts, 0.024 parts, 0.025 parts, 0.026 parts, 0.027 parts, 0.028 parts, 0.029 parts, 0.030 parts, 0.035 parts, 0.040 parts, 0.050 parts, 0.060 parts, 0.070 parts, 0.080 parts, 0.090 parts, 0.10 parts, 0.11 parts, 0.12 parts, 0.13 parts, 0.14 parts, 0.15 parts, 0.16 parts, 0.17 parts, 0.18 parts, 0.19 parts, 0.20 parts, 0.30 parts, 0.40 parts, 0.50 parts, 0.60 parts, 0.70 parts, 0.80 parts, 0.90 parts, 1.0 part, 1.5 parts, 2.0 parts, 2.5 parts, 3.0 parts, 3.5 parts, 4.0 parts, 4.5 parts, 5.0 parts, 6.0 parts, 7.0 parts, 8.0 parts, 9.0 parts or 10.0 parts.

According to the present invention, for the polymer composition of the present invention comprising the polyester graft copolymer and the polyester homopolymer, relative to the total mass of the polyester graft copolymer and the polyester homopolymer, the content of the polyester graft copolymer is 0.1 mass% to 80.0 mass%, preferably 0.5 mass% to 55.0 mass%, and more preferably 1.0 mass% to 30.0 mass%; for example, the content of the polyester graft copolymer can be 1.0 mass%, 2.0 mass%, 3.0 mass%, 4.0 mass%, 5.0 mass%, 6.0 mass%, 7.0 mass%, 8.0 mass%, 9.0 mass%, 10 mass%, 11 mass%, 12 mass%, 13 mass%, 14 mass%, 15 mass%, 16 mass%, 17 mass%, 18 mass%, 19 mass%, 20 mass%, 21 mass%, 22 mass%, 23 mass%, 24 mass%, 25 mass%, 26 mass%, 27 mass%, 28 mass%, 29 mass%, 30 mass%, 35 mass%, 40 mass%, 45 mass%, 50 mass% or 55 mass%; and the content of the polyester homopolymer is 20 mass% to 99.9 mass%, preferably 45.0 mass% to 99.5 mass%, more preferably 70.0 mass% to 99.0 mass%; for example, the content of the polyester homopolymer can be 25.0 mass%, 30.0 mass%, 35.0 mass%, 40.0 mass%, 45.0 mass%, 50.0 mass%, 55.0 mass%, 60.0 mass%, 65.0 mass%, 70.0 mass%, 71.0 mass%, 72.0 mass%, 73.0 mass%, 74.0 mass%, 75.0 mass%, 76.0 mass%, 77.0 mass%, 78.0 mass%, 79.0 mass%, 80.0 mass%, 81.0 mass%, 82.0 mass%, 83.0 mass%, 84.0 mass%, 85.0 mass%, 86.0 mass%, 87.0 mass%, 88.0 mass%, 89.0 mass%, 90.0 mass%, 91.0 mass%, 92.0 mass%, 93.0 mass%, 94.0 mass%, 95.0 mass%, 96.0 mass%, 97.0 mass%, 98.0 mass% or 99.0 mass%.

According to the present invention, the polyglycolic acid composition of the present invention comprising the polyglycolic acid graft copolymer and the polyglycolic acid homopolymer, relative to 100 parts by mass of polyglycolic acid segment

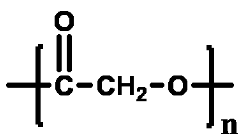

(i.e., the total mass of

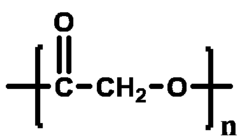

being 100 parts by mass; wherein

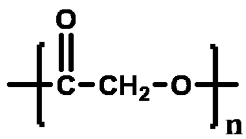

is present in

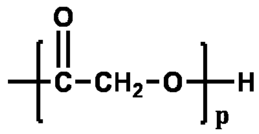

in formula (I) and in

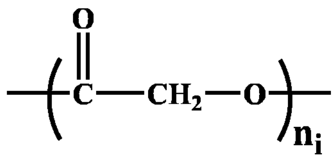

in formula (II)), when the polyglycolic acid graft copolymer contains polyvinyl alcohol main chain, contains 0.001 to 5 parts by mass, preferably 0.005 to 3 parts by mass, preferably 0.005 to 1 part by mass, more preferably 0.01 to 1 part by mass (e.g., 0.001 parts, 0.002 parts, 0.003 parts, 0.004 parts, 0.005 parts, 0.006 parts, 0.007 parts, 0.008 parts, 0.009 parts, 0.010 parts, 0.011 parts, 0.012 parts, 0.013 parts, 0.014 parts, 0.015 parts, 0.016 parts, 0.017 parts, 0.018 parts, 0.019 parts, 0.020 parts, 0.021 parts, 0.022 parts, 0.023 parts, 0.024 parts, 0.025 parts, 0.026 parts, 0.027 parts, 0.028 parts, 0.029 parts, 0.030 parts, 0.035 parts, 0.040 parts, 0.050 parts, 0.060 parts, 0.070 parts, 0.080 parts, 0.090 parts, 0.10 parts, 0.11 parts, 0.12 parts, 0.13 parts, 0.14 parts, 0.15 parts, 0.16 parts, 0.17 parts, 0.18 parts, 0.19 parts, 0.20 parts, 0.30 parts, 0.40 parts, 0.50 parts, 0.60 parts, 0.70 parts, 0.80 parts, 0.90 parts, 1.0 part, 1.5 parts, 2.0 parts, 2.5 parts, 3.0 parts, 3.5 parts, 4.0 parts, 4.5 parts or 5.0 parts) of

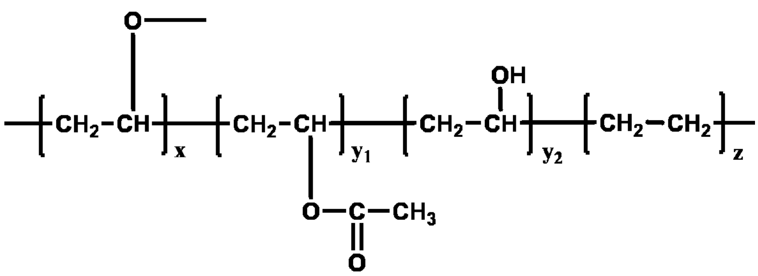

(in the formula, z = 0), and contains 0.001 to 1 parts by mass (e.g., 0.001 parts, 0.002 parts, 0.003 parts, 0.004 part, 0.005 parts, 0.006 parts, 0.007 parts, 0.008 parts, 0.009 parts, 0.010 parts, 0.011 parts, 0.012 parts, 0.013 parts, 0.014 parts, 0.015 parts, 0.016 parts, 0.017 parts, 0.018 parts, 0.019 parts, 0.020 parts, 0.021 parts, 0.022 parts, 0.023 parts, 0.024 parts, 0.025 parts, 0.026 parts, 0.027 parts, 0.028 parts, 0.029 parts, 0.030 parts, 0.031 parts, 0.032 parts, 0.033 parts, 0.034 parts, 0.035 parts, 0.036 parts, 0.037 parts, 0.038 parts, 0.039 parts, 0.040 parts, 0.041 parts, 0.042 parts, 0.043 parts, 0.044 parts, 0.045 parts, 0.046 parts, 0.047 parts, 0.048 parts, 0.049 parts, 0.050 parts, 0.051 parts, 0.052 parts, 0.053 parts, 0.054 parts, 0.055 parts, 0.056 parts, 0.057 parts, 0.058 parts, 0.059 parts, 0.060 parts, 0.061 parts, 0.062 parts, 0.063 parts, 0.064 parts, 0.065 parts, 0.066 parts, 0.067 parts, 0.068 parts, 0.069 parts, 0.070 parts, 0.080 parts, 0.090 parts, 0.10 parts, 0.11 parts, 0.12 parts, 0.13 parts, 0.14 parts, 0.15 parts, 0.16 parts, 0.17 parts, 0.18 parts, 0.19 parts, 0.20 parts, 0.30 parts, 0.40 parts, 0.50 parts, 0.60 parts, 0.70 parts, 0.80 parts, 0.90 parts or 1.0 part) of

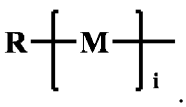

According to the present invention, the polyglycolic acid composition of the present invention comprising the polyglycolic acid graft copolymer and the polyglycolic acid homopolymer, relative to 100 parts by mass of the polyglycolic

acid segment

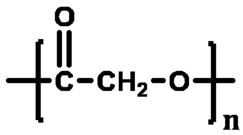

(i.e., the total mass of

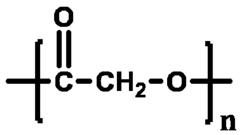

being 100 parts by mass; wherein

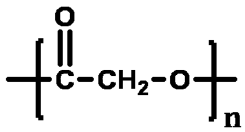

is present in

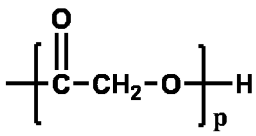

in formula (I) and in

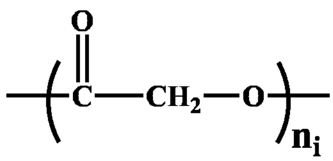

in formula (II)), when the polyglycolic acid graft copolymer comprises ethylene-vinyl alcohol copolymer main chain, contains 0.001 to 10 parts by mass, preferably 0.002 to 8 parts by mass, preferably 0.005 to 7 parts by mass, and more preferably 0.01 to 5 parts by mass (e.g., 0.001 parts, 0.002 parts, 0.003 parts, 0.004 parts, 0.005 parts, 0.006 parts, 0.007 parts, 0.008 parts, 0.009 parts, 0.010 parts, 0.011 parts, 0.012 parts, 0.013 parts, 0.014 parts, 0.015 parts, 0.016 parts, 0.017 parts, 0.018 parts, 0.019 parts, 0.020 parts, 0.021 parts, 0.022 parts, 0.023 parts, 0.024 parts, 0.025 parts, 0.026 parts, 0.027 parts, 0.028 parts, 0.029 parts, 0.030 parts, 0.035 parts, 0.040 parts, 0.050 parts, 0.060 parts, 0.070 parts, 0.080 parts, 0.090 parts, 0.10 parts, 0.11 parts, 0.12 parts, 0.13 parts, 0.14 parts, 0.15 parts, 0.16 parts, 0.17 parts, 0.18 parts, 0.19 parts, 0.20 parts, 0.30 parts, 0.40 parts, 0.50 parts, 0.60 parts, 0.70 parts, 0.80 parts, 0.90 parts, 1.0 part, 1.5 parts, 2.0 parts, 2.5 parts, 3.0 parts, 3.5 parts, 4.0 parts, 4.5 parts, 5.0 parts, 6.0 parts, 7.0 parts, 8.0 parts, 9.0 parts or 10.0 parts) of

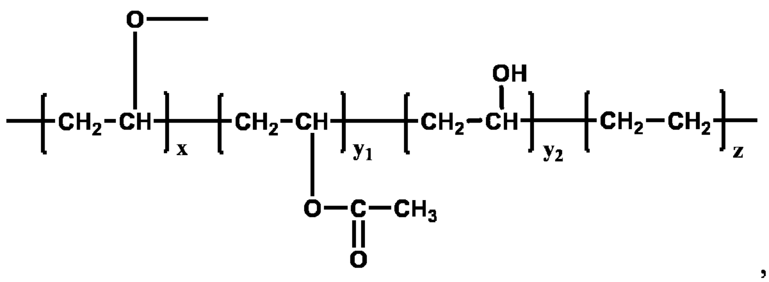

,

and contains 0.001 to 1 part by mass (e.g., 0.001 parts, 0.002 parts, 0.003 parts, 0.004 part, 0.005 parts, 0.006 parts, 0.007 parts, 0.008 parts, 0.009 parts, 0.010 parts, 0.011 parts, 0.012 parts, 0.013 parts, 0.014 parts, 0.015 parts, 0.016 parts, 0.017 parts, 0.018 parts, 0.019 parts, 0.020 parts, 0.021 parts, 0.022 parts, 0.023 parts, 0.024 parts, 0.025 parts, 0.026 parts, 0.027 parts, 0.028 parts, 0.029 parts, 0.030 parts, 0.031 parts, 0.032 parts, 0.033 parts, 0.034 parts, 0.035 parts, 0.036 parts, 0.037 parts, 0.038 parts, 0.039 parts, 0.040 parts, 0.041 parts, 0.042 parts, 0.043 parts, 0.044 parts, 0.045 parts, 0.046 parts, 0.047 parts, 0.048 parts, 0.049 parts, 0.050 parts, 0.051 parts, 0.052 parts, 0.053 parts, 0.054 parts, 0.055 parts, 0.056 parts, 0.057 parts, 0.058 parts, 0.059 parts, 0.060 parts, 0.061 parts, 0.062 parts, 0.063 parts, 0.064 parts, 0.065 parts, 0.066 parts, 0.067 parts, 0.068 parts, 0.069 parts, 0.070 parts, 0.080 parts, 0.090 parts, 0.10 parts, 0.11 parts, 0.12 parts, 0.13 parts, 0.14 parts, 0.15 parts, 0.16 parts, 0.17 parts, 0.18 parts, 0.19 parts, 0.20 parts, 0.30 parts, 0.40 parts, 0.50 parts, 0.60 parts, 0.70 parts, 0.80 parts, 0.90 parts or 1.0 part) of

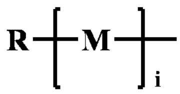.

The mass content of each of the above segments/structures/polymer chains can be tested by methods well known in the art, such as nuclear magnetic resonance and/or infrared methods. Alternatively, the mass content of each of the above segments/structures/polymer chains can be calculated by the charging amounts during the preparation process.

For the polymer composition of the present invention, the overall weight average molecular weight of the polymer composition is 180,000 to 1,500,000 g/mol, preferably 200,000 to 1,500,000 g/mol, more preferably 250,000 to 500,000 g/mol; for example, the overall weight average molecular weight of the polymer composition can be 180,000 g/mol, 190,000 g/mol, 200,000 g/mol, 210,000 g/mol, 220,000 g/mol, 230,000 g/mol, 240,000 g/mol, 250,000 g/mol, 300,000 g/mol, 350,000 g/mol, 400,000 g/mol, 450,000 g/mol, 500,000 g/mol, 600,000 g/mol, 700,000 g/mol, 800,000 g/mol, 900,000 g/mol, 1000,000 g/mol, 1,100,000 g/mol, 1,200,000 g/mol, 1,300,000 g/mol, 1,400,000 g/mol or 1,500,000 g/mol, and can be a range formed by any two of above values. The "overall weight average molecular weight" refers to the weight average molecular weight of the polymer composition as a whole. For the polymer composition of the present invention, the overall molecular weight polydispersity index of the polymer composition can be 1.5 to 20.0, preferably 2.0 to 12.0, preferably 2.0 to 6.0, and more preferably 2.0 to 3.5. For the polymer composition of the present invention, when measured by GPC, the number of peaks in its molecular weight distribution is at least 2, preferably 2, 3 or 4.

For the polymer composition of the present invention, the weight average molecular weight of the polyester graft copolymer is 500,000 to 10,000,000 g/mol, preferably 1,000,000 to 7,000,000 g/mol, more preferably 1,000,000 to 6,000,000 g/mol; for example, it can be 1,000,000 g/mol, 1,500,000 g/mol, 2,000,000 g/mol, 3,000,000 g/mol, 4,000,000 g/mol, 5,000,000 g/mol or 6,000,000 g/mol, and can be a range formed by any two of above values. The molecular weight polydispersity index of the polyester graft copolymer is 1.0 to 3.0, preferably 1.1 to 1.5. For the polymer composition of the present invention, the weight average molecular weight of the polyester homopolymer is 50,000 to 350,000 g/mol, preferably 100,000 to 200,000 g/mol; for example, it can be 60,000 g/mol, 70,000 g/mol, 80,000 g/mol, 90,000 g/mol, 100,000 g/mol, 120,000 g/mol, 140,000 g/mol, 160,000 g/mol, 180,000 g/mol, 200,000 g/mol, 220,000 g/mol, 240,000 g/mol, 260,000 g/mol, 280,000 g/mol, 300,000 g/mol, 320,000 g/mol, 330,000 g/mol, 340,000 g/mol or 350,000 g/mol, and can be a range formed by any two of above values. The molecular weight polydispersity index of the polyester homopolymer is 1.0 to 3.0, preferably 1.4 to 2.9.

The overall weight average molecular weight of the polyglycolic acid composition of the present invention can be 180,000 to 1,500,000 g/mol, preferably 200,000 to 1,500,000 g/mol, more preferably 250,000 to 500,000 g/mol, for example, it can be 180,000 g/mol, 190,000 g/mol, 200,000 g/mol, 210,000 g/mol, 220,000 g/mol, 230,000 g/mol, 240,000 g/mol, 250,000 g/mol, 300,000 g/mol, 350,000 g/mol, 400,000 g/mol, 450,000 g/mol, 500,000 g/mol, 600,000 g/mol, 700,000 g/mol, 800,000 g/mol, 900,000 g/mol, 1,000,000 g/mol, 1,100,000 g /mol, 1,200,000 g/mol, 1,300,000 g/mol, 1,400,000 g/mol or 1,500,000 g/mol, and can be a range formed by any two of above values.

According to the present invention, the overall molecular weight polydispersity index of the polyglycolic acid composition can be 1.5 to 20.0, preferably 2.0 to 12.0, preferably 2.0 to 6.0, and more preferably 2.0 to 3.5.

According to the present invention, the number of peaks in molecular weight distributionof the polyglycolic acid composition is at least 2, for example including but not limited to 2, 3 or 4 peaks.

According to the present invention, the weight average molecular weight of the polyglycolic acid graft copolymer in the polyglycolic acid composition can be 500,000 to 10,000,000 g/mol, preferably 1,000,000 to 7,000,000 g/mol, more preferably 1,000,000 to 6,000,000 g/mol, for example, it can be 1,000,000 g/mol, 1,500,000 g/mol, 2,000,000 g/mol, 3,000,000 g/mol, 4,000,000 g/mol, 5,000,000 g/mol, 6,000,000 g/mol, and can be a range formed by any two of above values.

According to the present invention, the molecular weight polydispersity index of the polyglycolic acid graft copolymer in the polyglycolic acid composition can be 1.0 to 3.0, preferably 1.1 to 1.5.

According to the present invention, the weight average molecular weight of the polyglycolic acid homopolymer in the polyglycolic acid composition can be 50,000 to 350,000 g/mol, preferably 100,000 to 200,000 g/mol, for example, 60,000 g/mol, 70,000 g/mol, 80,000 g/mol, 90,000 g/mol, 100,000 g/mol, 120,000 g/mol, 140,000 g/mol, 160,000 g/mol, 180,000 g/mol, 200,000 g/mol, 220,000 g/mol, 240,000 g/mol, 260,000 g/mol, 280,000 g/mol, 300,000 g/mol, 320,000 g/mol, 330,000 g/mol, 340,000 g/mol or 350,000 g/mol, and can be a range formed by any two of above values.

According to the present invention, the molecular weight polydispersity index of the polyglycolic acid homopolymer in the polyglycolic acid composition can be 1.0 to 3.0, preferably 1.4 to 2.9.

According to the present invention, the contents of the polyglycolic acid graft copolymer and the polyglycolic acid homopolymer in the polyglycolic acid composition can be selected within a wide range. In some embodiments of the present invention, relative to the total mass of the polyglycolic acid graft copolymer and the polyglycolic acid homopolymer, the content of the polyglycolic acid graft copolymer is 0.1 mass% to 80.0 mass%, preferably 0.5 mass% to 55.0 mass%, and more preferably 1.0 mass% to 30.0 mass%; for example, the content of the polyglycolic acid graft copolymer can be 1.0 mass%, 2.0 mass%, 3.0 mass%, 4.0 mass%, 5.0 mass%, 6.0 mass%, 7.0 mass%, 8.0 mass%, 9.0 mass%, 10 mass%, 11 mass%, 12 mass%, 13 mass%, 14 mass%, 15 mass%, 16 mass%, 17 mass%, 18 mass%, 19 mass%, 20 mass%, 21 mass%, 22 mass%, 23 mass%, 24 mass%, 25 mass%, 26 mass%, 27 mass%, 28 mass%, 29 mass%, 30.0 mass%, 35 mass%, 40 mass%, 45 mass%, 50 mass% or 55 mass%; and the content of the polyglycolic acid homopolymer is 20 mass% to 99.9 mass%, preferably 45.0 mass% to 99.5 mass%, more preferably 70.0 mass% to 99.0 mass%; for example, the content of the polyglycolic acid homopolymer can be 25.0 mass%, 30.0 mass%, 35.0 mass%, 40.0 mass%, 45.0 mass%, 50.0 mass%, 55.0 mass%, 60.0 mass%, 65.0 mass%, 70.0 mass%, 71.0 mass%, 72.0 mass%, 73.0 mass%, 74.0 mass%, 75.0 mass%, 76.0 mass%, 77.0 mass%, 78.0 mass%, 79.0 mass%, 80.0 mass%, 81.0 mass%, 82.0 mass%, 83.0 mass%, 84.0 mass%, 85.0 mass%, 86.0 mass%, 87.0 mass%, 88.0 mass%, 89.0 mass%, 90.0 mass%, 91.0 mass%, 92.0 mass%, 93.0 mass%, 94.0 mass%, 95.0 mass%, 96.0 mass%, 97.0 mass%, 98.0 mass% or 99.0 mass%.

In the present invention, the molecular weight of the polyglycolic acid graft copolymer in the polyglycolic acid composition of the present invention is higher than the molecular weight of the polyglycolic acid homopolymer.

According to the present invention, the number of peaks in the molecular weight distribution curve with peak molecular weight $M_p$ greater than 500,000 g/mol (i.e., $lg(M_w)$ of peak in the GPC curve being greater than 5.7) is at least 1, for example, 1, 2 or 3, and the number of peaks with peak molecular weight $M_p$ less than 500,000 g/mol (i.e., $lg(M_w)$ of peak in the GPC curve being less than 5.7) is at least 1, for example, 1.

According to the present invention, the molecular weight distribution curve and the number of peaks in the molecular weight distribution curve can be measured by gel permeation chromatography (GPC). A peak in molecular weight distribution is a point in the GPC curve at which the first-order derivative is zero and the second-order derivative is less than zero in the range of the weight average molecular weight ($M_w$) greater than 10,000 g/mol (i.e., $1g(M_w)$ greater than 4.0).

The overall weight average molecular weight/overall number average molecular weight of the polymer composition such as the polyglycolic acid composition of the present invention, the overall molecular weight polydispersity index of the polymer composition such as the polyglycolic acid composition, the number of peaks in molecular weight distribution of the polymer composition such as the polyglycolic acid composition, the weight average molecular weight /number average molecular weight of the polyester graft copolymer such as the polyglycolic acid graft copolymer, the molecular weight polydispersity index of the polyester graft copolymer such as the polyglycolic acid graft copolymer, the weight average molecular weight/number average molecular weight of the polyester homopolymer such as the polyglycolic acid homopolymer, the molecular weight polydispersity index of the polyester homopolymer such as the polyglycolic acid homopolymer, the mass fraction of the polyester graft copolymer such as the polyglycolic acid graft copolymer, the mass fraction of the polyester homopolymer such as the polyglycolic acid homopolymer, etc. can be measured by gel permeation chromatography (GPC). The specific measurement method is generally known in the art, and conventional testing parameters can be used. For example, the following method can be used: the test instrument is PL-GPC50 gel permeation chromatograph from Agilent, USA, and the processing software is GPC offline; during the test, the mobile phase is hexafluoroisopropanol containing 5 mmol/L sodium trifluoroacetate, the flow rate is 1 mL/min, the column temperature is 40°C, the injection volume is 100 μL, the standard sample is PMMA, and the sample concentration is 1 mg/mL. The specific values of the above parameters are obtained according to analytical methods well known in the art.

The melt flow rate (MFR) of the polyglycolic acid composition of the present invention at 230°C/2.16 kg is not higher than 20.0 g/10 min, preferably 0.01 to 20.0 g/10 min, more preferably 0.5 to 10.0 g/10 min, for example, it can be 0.5 g/10 min, 1.0 g/10 min, 2.0 g/10 min, 3.0 g/10 min, 4.0 g/10 min, 5.0 g/10 min, 6.0 g/10 min, 7.0 g/10 min, 8.0 g/10 min, 9.0 g/10 min, 10.0 g/10 min, 11.0 g/10 min, 12.0 g/10 min, 13.0 g/10 min, 14.0 g/10 min, 15.0 g/10 min, 16.0 g/10 min, 17.0 g/10 min, 18.0 g/10 min, 19.0 g/10 min or 20.0 g/10 min, and can be a range formed by any two of the above values.

The melt flow rate can be measured by methods well known in the art. For example, but not limited to, MFR can be measured by the following method: using CEAST MF20 melt flow rate tester from Instron, USA; the test temperature is 230°C, the load weight is 2.16 kg; and the preheating period is 4 min.

According to the present invention, the polyglycolic acid composition of the present invention has an excellent

melt strength. In some embodiments of the present invention, the melt strength of the polyglycolic acid composition at 235°C is not less than 5 cN, preferably not less than 8 cN, and not higher than 200 cN, preferably not higher than 100 cN.

The present invention also provides a method for preparing the polymer composition of the present invention, which comprises subjecting a monomer for polyester, a macromolecular initiator and a small molecule initiator to melt polymerization to provide the polymer composition. In some embodiments, the melt polymerization is carried out in the presence of a catalyst. In some other embodiments, the melt polymerization is carried out in the presence of a catalyst and an antioxidant.

In the preparation method of the polymer composition of the present invention, the monomer for polyester can be selected from a hydroxy acid monomer or a derivative of a hydroxy acid monomer. In some embodiments, the monomer is selected from a lactide monomer, a lactone monomer or a combination thereof. Preferably, the lactide monomer is a lactide monomer based on $\alpha$-hydroxy acid or $\beta$-hydroxy acid, and more preferably the lactide monomer is selected from the group consisting of glycolide, lactide, butyrolactone, valerolactone, caprolide and any combination thereof. Preferably, the lactone monomer is selected from the group consisting of $\beta$-butyrolactone, $\delta$-valerolactone, $\varepsilon$-caprolactone, $\beta$-propiolactone, $\beta$-valerolactone, $\gamma$-butyrolactone, $\gamma$-valerolactone, $\gamma$-octalactone, $\beta$-methyl-$\delta$-valerolactone, $\delta$-stearolactone, 2-methyl-$\varepsilon$-caprolactone, 4-methyl-$\varepsilon$-caprolactone, $\varepsilon$-octalactone, $\varepsilon$-palmitolactone and any combination thereof, and more preferably the lactone monomer is selected from the group consisting of $\beta$-butyrolactone, $\delta$-valerolactone, $\varepsilon$-caprolactone and any combination thereof. Most preferably, the monomer is selected from the group consisting of methyl glycolate, glycolic acid, glycolide, and any combination thereof.

In the preparation method of the polymer composition of the present invention, the macromolecular initiator is at least one of polyvinyl alcohol and ethylene-vinyl alcohol copolymer.

As understood by those skilled in the art, in the preparation method of the polymer composition of the present invention, when the monomer for polyester is selected from the group consisting of methyl glycolate, glycolic acid, glycolide and any combination thereof, the polyglycolic acid composition of the present invention is prepared.

Therefore, the present invention provides a method for preparing the polyglycolic acid composition of the present invention, comprising melt polymerizing a monomer capable of polymerizing to form polyglycolic acid segments

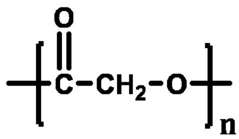,

a macromolecular initiator and a small molecule initiator to obtain the polyglycolic acid composition. In some embodiments, the melt polymerization is carried out in the presence of a catalyst. In some other embodiments, the melt polymerization is carried out in the presence of a catalyst and an antioxidant. When used to obtain the polyglycolic acid composition, the monomer includes at least one of methyl glycolate, glycolic acid and glycolide; more preferably glycolide.

In the method of the present invention, the polyester graft copolymer, such as the polyglycolic acid graft copolymer, and the polyester homopolymer, such as the polyglycolic acid homopolymer, are formed in situ simultaneously during the melt polymerization process. In the present invention, "formed in situ simultaneously" means that the polyester graft copolymer, such as the polyglycolic acid graft copolymer, and the polyester homopolymer, such as the polyglycolic acid homopolymer, are formed together in the same melt polymerization process.

Since water, as an initiator, can also participate in the ring-opening polymerization of cyclic-ester or lactide monomers such as glycolide, the water content of cyclic-ester or lactide monomers such as glycolide needs to be detected and controlled when necessary to prevent the water content from being too high. When no small molecule initiator is additionally added, the low molecular weight portion of the polymer composition such as the polyglycolic acid composition of the present invention is the polyester homopolymer such as the polyglycolic acid homopolymer obtained by using water in the raw materials such as in the monomer as initiator. Therefore, in some embodiments, the small molecule initiator is not added intentionally in the preparation method of the polymer composition of the present invention, rather water in the raw materials such as in the monomer is used as the small molecule initiator. In the present invention, in some embodiments, the monomer for polyester, such as glycolide, can be directly used in the method for preparing the polymer composition of the present invention without the need for a separate additional water removal treatment. In addition, the method of the present invention is insensitive to water, and therefore does not require a waterless operating environment, which is particularly advantageous.

In some embodiments, in the present invention, the content of water in glycolide can be 0 ppm to not more than 500 ppm by weight, preferably not more than 300 ppm; for example, it can be 0 ppm, 10 ppm, 20 ppm, 30 ppm, 40 ppm, 50 ppm, 60 ppm, 70 ppm, 80 ppm, 90 ppm, 100 ppm, 150 ppm, 200 ppm, 250 ppm, 300 ppm, 350 ppm, 400 ppm or 450 ppm. In some embodiments, in the present invention, the purity of glycolide is not less than 99.0 wt%, preferably not less than 99.8 wt%, and can be up to 100 wt%. In some embodiments, in the present invention, the acid value of glycolide can be 0

mmol/kg to not more than 5.0 mmol/kg, preferably not more than 1.5 mmol/kg. In some embodiments, in the present invention, the water content of glycolide is not more than 500 ppm, preferably not more than 300 ppm; the purity of glycolide is not less than 99.0%, preferably not less than 99.8%; the acid value of glycolide is not more than 5.0 mmol/kg, preferably not more than 1.5 mmol/kg.

According to the present invention, the macromolecular initiator is at least one of polyvinyl alcohol and ethylene-vinyl alcohol copolymer.

According to the present invention, the alcoholysis degree of the polyvinyl alcohol can be selected in a wide range. In some embodiments of the present invention, the alcoholysis degree of the polyvinyl alcohol can be 68-99%, for example, it can be 68%, 69%, 70%, 72%, 74%, 76%, 78%, 80%, 82%, 84%, 86%, 88%, 90%, 92%, 94%, 96% or 98%. According to the present invention, the degree of polymerization of the polyvinyl alcohol can be selected in a wide range. In some embodiments of the present invention, the degree of polymerization of polyvinyl alcohol can be 100-6000, preferably 300-2000; for example, it can be 200, 300, 400, 500, 600, 700, 800, 900, 1000, 1500, 2000, 2500, 3000, 3500, 4000, 4500, 5000 or 5500, and can be a range formed by any two of above values.

According to the present invention, the ethylene-vinyl alcohol copolymer can be selected in a wide range. In some embodiments of the present invention, the content of the ethylene segment in the ethylene-vinyl alcohol copolymer can be 25 to 50 mol%; for example, it can be 25 mol%, 30 mol%, 35 mol%, 40 mol%, 45mol% or 50mol%, and can be any range formed by any two of the above values. The degree of polymerization of the ethylene-vinyl alcohol copolymer can be 50-6000, preferably 300-2000; for example, it can be 100, 200, 300, 400, 500, 600, 700, 800, 900, 1000, 1500, 2000, 2500, 3000, 3500, 4000, 4500, 5000 or 5500, and can be any range formed by any two of the above values.

According to the present invention, the melt flow rate of the ethylene-vinyl alcohol copolymer can be selected in a wide range. In some embodiments of the present invention, the melt flow rate of the ethylene-vinyl alcohol copolymer at 190°C/2.16 kg can be 0.1 to 50.0 g/10 min.

According to the present invention, the small molecule initiator can be selected in a wide range. In some embodiments of the present invention, the small molecule initiator can be water and/or a hydroxyl and/or amino group-containing small molecule compound with a boiling point greater than 160°C and not more than 600°C; preferably, the molecular weight of the hydroxyl and/or amino group-containing small molecule compound is greater than 60 g/mol and not greater than 1000 g/mol; preferably 60-300 g/mol. The small molecule initiator can be selected from: water, ethylene glycol, butanediol, glycerol, serinol, leucinol, pentaerythritol, sorbitol, xylitol, amino acids, phenol, hydroquinone, resorcinol, benzyl alcohol, aniline, benzylamine, p-phenylenediamine, m-phenylenediamine, hexamethylenediamine, dodecanediamine, etc.

In the present invention, calculated as hydroxyl and relative to each gram of monomer, the content of hydroxyl contained in the macromolecular initiator can be 0.1 μmol/g monomer to 1.5 mmol/g monomer, preferably 0.5 μmol/g monomer to 1.0 mmol/g monomer, more preferably 1.0 μmol/g monomer to 0.5 mmol/g monomer; and/or, in the present invention, calculated as active hydrogen and relative to each gram of monomer, the content of active hydrogen contained in the small molecule initiator can be 3.0 μmol/g monomer to 40.0 μmol/g monomer, preferably 10.0 μmol/g monomer to 30.0 μmol/g monomer.

In some embodiments, calculated as hydroxyl and relative to each gram of monomer, the content of hydroxyl contained in the macromolecular initiator can be 0.1 μmol/g monomer to 1.5 mmol/g monomer, preferably 0.5 μmol/g monomer to 1.0 mmol/g monomer, more preferably 1.0 μmol/g monomer to 0.5 mmol/g monomer. In some embodiments, calculated as hydroxyl and relative to each gram of monomer, the content of hydroxyl contained in the macromolecular initiator can be 0.1 μmol/g monomer, 0.2 μmol/g monomer, 0.3 μmol/g monomer, 0.4 μmol/g monomer, 0.5 μmol/ g monomer, 0.6 μmol/g monomer or 0.7 μmol/g monomer to less than or equal to 0.85 mmol/g monomer, 0.90 mmol/g monomer, 0.95 mmol /g monomer or 1.0 mmol /g monomer.

In some embodiments, calculated as active hydrogen and relative to each gram of monomer, the content of active hydrogen contained in the small molecule initiator can be 3.0 μmol/g monomer to 40.0 μmol/g monomer, preferably 10.0 μmol/g monomer to 30.0 μmol/g monomer. In some embodiments, calculated as active hydrogen and relative to each gram of monomer, the content of active hydrogen contained in the small molecule initiator can be 3.0 μmol/g monomer, 4.0 μmol/g monomer, 5.0 μmol/ g monomer, 6.0 μmol/g monomer, 7.0 μmol/g monomer, 8.0 μmol/g monomer, 9.0 μmol/g monomer, 10.0 μmol/g monomer, 11.0 μmol/g monomer, 12.0 μmol/g monomer, 13.0 μmol/g monomer, 14.0 μmol/g monomer, 15.0 μmol/g monomer, 16.0 μmol/g monomer, 17.0 μmol/g monomer, 18.0 μmol/g monomer, 19.0 μmol/g monomer, 20.0 μmol/g monomer, 21.0 μmol/g monomer, 22.0 μmol/g monomer, 23.0 μmol/g monomer, 24.0 μmol/g monomer, 25.0 μmol/g monomer, 25.5 μmol/g monomer, 26.0 μmol/g monomer, 26.5 μmol/g monomer, 27.0 μmol/g monomer, 27.5 μmol/g monomer, 28.0 μmol/g monomer, 29.0 μmol/g monomer, 30.0 μmol/g monomer, 31.0 μmol/g monomer, 32.0 μmol/g monomer, 33.0 μmol/g monomer, 34.0 μmol/g monomer, 35.0 μmol/g monomer or 40.0 μmol/g monomer.

According to the present invention, the catalyst can be selected in a wide range. In some embodiments of the present invention, the catalyst can be a salt compound of at least one of Group IIA to VA metal elements and transition metal elements or an organic guanidine catalyst. Preferably, the catalyst is a salt compound of at least one of Sn, Bi, Mg, Al,

Ca, Fe, Mn, Ti and Zn, and further preferably a Sn salt.

According to the present invention, the antioxidant can be selected in a wide range. In some embodiments of the present invention, the antioxidant is selected from the group consisting of hindered phenol antioxidants and/or phosphite antioxidants, that is, it can be a hindered phenol antioxidant, a phosphite antioxidant and any combination thereof. The antioxidant can include, but not limited to, at least one of 2,6-di-tert-butyl-p-cresol, 1,1,3-tris(2-methyl-4-hydroxy-5-tert-butylphenyl)butane, 2,2'-methylenebis(6-tert-butyl-4-methylphenol), hexanediol bis[β-(3,5-dibutyl-4-hydroxyphenyl)propionate], pentaerythritol tetrakis[β-(3,5-di-tert-butyl-4-hydroxyphenyl)propionate] (such as antioxidant Irganox 1010 from BASF), N,N'-bis[β-(3,5-di-tert-butyl-4-hydroxyphenyl)propionyl]hydrazine (such as antioxidant 1024), N,N'-bis-(3-(3,5-di-tert-butyl-4-hydroxyphenyl)propionyl)hexanediamine (such as antioxidant 1098), n-octadecyl β-(3,5-di-tert-butyl-4-hydroxyphenyl)propionate (such as antioxidant Irganox 1076 from BASF ), 1,3,5-trimethyl-2,4,6-tri(3,5-di-tert-butyl-4-hydroxybenzyl)benzene, triphenyl phosphite, tri(4-nonylphenyl) phosphite, diphenyl isooctyl phosphite, diphenyl isodecyl phosphite, monophenyl di(2-ethylhexyl) phosphite, phenyl diisodecyl phosphite, tri(2-ethylhexyl) phosphite, triisodecyl phosphite, tri(dodecyl) phosphite, pentaerythritol diisodecyl diphosphite, tris[2,4-di-tert-butylphenyl] phosphite (such as antioxidant 168), bis(2,4-dicumylphenyl)pentaerythritol diphosphite (such as antioxidant 686) and bis(2,4-di-tert-butylphenyl)pentaerythritol diphosphite (such as antioxidant 626).

According to the present invention, the amount of the antioxidant used can be selected within a wide range. In some embodiments of the present invention, the amount of the antioxidant used can be 0 to 2 parts, preferably 0.01 to 1 part (phr) relative to 100 parts by mass of the monomer.

According to the present invention, the amount of the polyvinyl alcohol and/or ethylene-vinyl alcohol copolymer used can be selected in a wide range. In some embodiments of the present invention, when the polyvinyl alcohol is used, the amount of the polyvinyl alcohol used can be 0.001 to 5 parts by mass, preferably 0.005 to 3 parts by mass, preferably 0.005 to 1 part by mass, more preferably 0.01 to 1 part by mass, relative to 100 parts by mass of monomer. In some embodiments, the amount of the polyvinyl alcohol used can be 0.001 parts, 0.002 parts, 0.003 parts, 0.004 parts, 0.005 parts, 0.006 parts, 0.007 parts, 0.008 parts, 0.009 parts, 0.010 parts, 0.011 parts, 0.012 parts, 0.013 parts, 0.014 parts, 0.015 parts, 0.016 parts, 0.017 parts, 0.018 parts, 0.019 parts, 0.020 parts, 0.021 parts, 0.022 parts, 0.023 parts, 0.024 parts, 0.025 parts, 0.026 parts, 0.027 parts, 0.028 parts, 0.029 parts, 0.030 parts, 0.035 parts, 0.040 parts, 0.050 parts, 0.060 parts, 0.070 parts, 0.080 parts, 0.090 parts, 0.10 parts, 0.11 parts, 0.12 parts, 0.13 parts, 0.14 parts, 0.15 parts, 0.16 parts, 0.17 parts, 0.18 parts, 0.19 parts, 0.20 parts, 0.30 parts, 0.40 parts, 0.50 parts, 0.60 parts, 0.70 parts, 0.80 parts, 0.90 parts, 1.0 part, 1.5 parts, 2.0 parts, 2.5 parts, 3.0 parts, 3.5 parts, 4.0 parts, 4.5 parts or 5.0 parts, by weight, relative to 100 parts by mass of monomer. In some embodiments of the present invention, when the ethylene-vinyl alcohol copolymer is used, the amount of the ethylene-vinyl alcohol copolymer used can be 0.001 to 10 parts by mass, preferably 0.002 to 8 parts by mass, preferably 0.005 to 7 parts by mass, and more preferably 0.01 to 5 parts by mass, relative to 100 parts by mass of monomer. In some embodiments, the amount of the ethylene-vinyl alcohol copolymer used can be 0.001 parts, 0.002 parts, 0.003 parts, 0.004 parts, 0.005 parts, 0.006 parts, 0.007 parts, 0.008 parts, 0.009 parts, 0.010 parts, 0.011 parts, 0.012 parts, 0.013 parts, 0.014 parts, 0.015 parts, 0.016 parts, 0.017 parts, 0.018 parts, 0.019 parts, 0.020 parts, 0.021 parts, 0.022 parts, 0.023 parts, 0.024 parts, 0.025 parts, 0.026 parts, 0.027 parts, 0.028 parts, 0.029 parts, 0.030 parts, 0.035 parts, 0.040 parts, 0.050 parts, 0.060 parts, 0.070 parts, 0.080 parts, 0.090 parts, 0.10 parts, 0.11 parts, 0.12 parts, 0.13 parts, 0.14 parts, 0.15 parts, 0.16 parts, 0.17 parts, 0.18 parts, 0.19 parts, 0.20 parts, 0.30 parts, 0.40 parts, 0.50 parts, 0.60 parts, 0.70 parts, 0.80 parts, 0.90 parts, 1.0 part, 1.5 parts, 2.0 parts, 2.5 parts, 3.0 parts, 3.5 parts, 4.0 parts, 4.5 parts, 5.0 parts, 6.0 parts, 7.0 parts, 8.0 parts, 9.0 parts or 10.0 parts, by weight, relative to 100 parts by mass of the monomer.

According to the present invention, the amount of the small molecule initiator used can be selected within a wide range. In some embodiments of the present invention, the amount of the small molecule initiator used is 0.001 to 1 part, preferably 0.01 to 0.1 parts, relative to 100 parts by mass of monomer. In some embodiments, the amount of the small molecule initiator used can be 0.001 parts, 0.002 parts, 0.003 parts, 0.004 parts, 0.005 parts, 0.006 parts, 0.007 parts, 0.008 parts, 0.009 parts, 0.010 parts, 0.011 parts, 0.012 parts, 0.013 parts, 0.014 parts, 0.015 parts, 0.016 parts, 0.017 parts, 0.018 parts, 0.019 parts, 0.020 parts, 0.021 parts, 0.022 parts, 0.023 parts, 0.024 parts, 0.025 parts, 0.026 parts, 0.027 parts, 0.028 parts, 0.029 parts, 0.030 parts, 0.031 parts, 0.032 parts, 0.033 parts, 0.034 parts, 0.035 parts, 0.036 parts, 0.037 parts, 0.038 parts, 0.039 parts, 0.040 parts, 0.041 parts, 0.042 parts, 0.043 parts, 0.044 parts, 0.045 parts, 0.046 parts, 0.047 parts, 0.048 parts, 0.049 parts, 0.050 parts, 0.051 parts, 0.052 parts, 0.053 parts, 0.054 parts, 0.055 parts, 0.056 parts, 0.057 parts, 0.058 parts, 0.059 parts, 0.060 parts, 0.061 parts, 0.062 parts, 0.063 parts, 0.064 parts, 0.065 parts, 0.066 parts, 0.067 parts, 0.068 parts, 0.069 parts, 0.070 parts, 0.080 parts, 0.090 parts, 0.10 parts, 0.11 parts, 0.12 parts, 0.13 parts, 0.14 parts, 0.15 parts, 0.16 parts, 0.17 parts, 0.18 parts, 0.19 parts, 0.20 parts, 0.30 parts, 0.40 parts, 0.50 parts, 0.60 parts, 0.70 parts, 0.80 parts, 0.90 parts or 1.0 part, relative to 100 parts by mass of monomer.

According to the present invention, the amount of the catalyst used can be selected within a wide range. In some embodiments of the present invention, the amount of the catalyst used is 0.005 to 1 part, preferably 0.01 to 0.2 parts, based on mass, relative to 100 parts of monomer.

According to the present invention, the conditions of the melt polymerization reaction can be selected in a wide

range. In some embodiments of the present invention, the conditions of the melt polymerization include: a temperature of 120 to 300°C, preferably 160 to 250 °C, and more preferably 200 to 240°C.

According to the present invention, the time conditions of the melt polymerization can be selected within a wide range. In some embodiments of the present invention, the reaction time is 0.5 to 60 min, preferably 1 to 10 min.

In some preferred embodiments of the present invention, the temperature of the melt polymerization reaction is 120 to 300°C, preferably 160 to 250°C, and more preferably 200 to 240°C; the reaction time is 0.5 to 60 min, preferably 1 to 10 min.

The melt polymerization reaction can be carried out in a melt mixing device. Preferably, the melt mixing device includes one or more of a kettle reactor, a tubular reactor, an internal mixer, a Farrel continuous mixer, a Banbury mixer, a single-screw extruder such as a reciprocating single-screw extruder, and a multi-screw extruder such as a twin-screw extruder; for example, a combination in series of plural types of devices or plural devices can be used; preferably an internal mixer or a twin-screw extruder.

In some embodiments of the present invention, the melt polymerization is carried out in a twin-screw extrusion equipment. Preferably, the polymerization reaction conditions of the twin-screw extrusion equipment include: a temperature of 180-250°C, preferably 210-240°C; and/or a screw rotation speed of 5-300 rpm, preferably 40-150 rpm; and/or a length to diameter ratio of 25-80, preferably 40-70. In some embodiments, the twin-screw extrusion equipment is a continuous twin-screw extrusion equipment.

In some embodiments, the melt polymerization reaction can be carried out in at least two, for example two, three or four, twin-screw extrusion equipments connected in series. Preferably, the polymerization reaction conditions of each twin-screw extrusion equipment connected in series include: a temperature of 180-250°C, preferably 210-240°C; and/or a screw rotation speed of 5-300 rpm, preferably 40-150 rpm; and/or a length to diameter ratio of 25-80, preferably 40-70.

According to the present invention, connecting twin-screw extrusion equipments in series can provide beneficial effects. Connecting twin-screw extrusion equipments in series can extend the residence time of the materials in the twin-screw extrusion equipments (i.e., increasing the reaction time) by increasing the length to diameter ratio, and in turn can reduce the reaction temperature or further increase the reaction conversion rate. In addition, vacuum devolatilization treatment can be conducted in the subsequent series-connected equipment to reduce the content of unreacted residual monomer(s), and/or a metal deactivator can be added to reduce the influence of the catalyst on product stability.

In some embodiments of the present invention, the melt polymerization is carried out in an internal mixer. In some embodiments, the internal mixing temperature is 180-250 °C, preferably 200-230°C; the rotation speed is 5-150 rpm, preferably 20-80 rpm; the reaction time is 1-20 min, preferably 3-10 min.

The internal mixer equipment suitable for the present invention can include internal mixers of different designs, such as the PolyLab HAAKE™ Rheomex OS 567-1000 internal mixer module produced by Thermo Fisher, USA.

Twin-screw extrusion equipments suitable for the present invention include twin-screw extruders with various designs, such as HAAKE Eurolab16 benchtop parallel co-rotating twin-screw extruder produced by Thermo Fishe, USA, ZSK Mc18 or ZSK 40 co-rotating parallel twin-screw extruders produced by Coperion, Germany, etc. In some embodiments, parallel co-rotating twin-screw extruders from LabTech can be used.

The present invention also provides a polymer composition such as a polyglycolic acid composition prepared by the preparation method of the present invention. The preparation method of the present invention can prepare the polymer composition such as the polyglycolic acid composition of the present invention.

The polyglycolic acid composition of the present invention has the characteristics of high molecular weight and multimodal molecular weight distribution, and improves significantly the melt strength of the polyglycolic acid composition while retaining sufficient processability. At the same time, the preparation method of the polyglycolic acid composition of the present invention has high production efficiency, can achieve continuous preparation on a twin-screw extruder, and greatly reduces the reaction time. The reaction time is shortened from several hours in prior art to a few minutes, significantly saving energy consumption and reducing carbon emission, and overcoming the defects of high production cost and energy consumption caused by the slow polymerization reaction of polyglycolic acid in prior art.

The present invention also provides an article comprising the polymer composition such as the polyglycolic acid composition of the present invention, wherein the article can be selected from the group consisting of films, rods, tubes, wires, sheets, profiles, and any combination thereof.

In some embodiments, the article of the present invention is a film, preferably a multilayer composite film, comprising the polymer composition such as the polyglycolic acid composition of the present invention. Preferably, the film, such as a multilayer composite film, comprises the polyglycolic acid composition of the present invention, such as comprising the polyglycolic acid composition of the present invention in at least one layer.

In some embodiments, the present invention provides a multilayer composite film with high barrier properties, comprising a barrier layer, a protective layer and a tie layer, wherein the protective layer is the outer layer, the tie layer is located between the barrier layer and the protective layer, and the barrier layer contains the polyglycolic acid composition of the present invention.

According to the present invention, the number of the barrier layer(s) is at least 1, for example, ti can be 1, 2 or 3

layers. The thickness of a single layer of the barrier layer can be 1 to 50 microns. The number of the protective layers can be at least 2, for example 2 to 7. The material of each protective layer can be the same or different and the thickness of each layer can be 3 to 80 microns. The outermost layer of the multilayer composite film must be the protective layer. The number of the tie layers can be at least 2, and the thickness of a single layer can be 0.5 to 20 microns. In some embodiments, the total thickness of the multilayer composite film can be 8 to 250 microns.

According to the present invention, the protective layer can include a polyolefin having a good water barrier property and good toughness. Preferably, the polyolefin can be selected from the group consisting of low-density polyethylene, linear low-density polyethylene, medium-density polyethylene, ethylene-propylene copolymer, ethylene-vinyl acetate copolymer, polypropylene, ethylene-propylene-diene-non-conjugated-diene copolymer, metallocene polyethylene, metallocene polypropylene, poly-1-butene and its derivatives, cycloolefin polymer (COP) and any combination thereof.

According to the present invention, the tie layer can be a polyolefin graft copolymer or an ethylene-polar monomer copolymer. Preferably, the polyolefin graft copolymer can be selected from the group consisting of maleic anhydride grafted polyethylene, acrylic acide grafted polyethylen, methyl methacrylate grafted polyethylene, maleic anhydride grafted polypropylene, ethylene-acrylic acid copolymer, ethylene-methacrylic acid copolymer and any combination thereof.

According to the present invention, in some embodiments, the oxygen transmission rate (OTR) of the multilayer composite film at $23\pm0.5°C$ and 65% $\pm$ 5% relative humidity is not more than 100 $cm^3/(m^2 \cdot day \cdot atm)$, preferably not more than 30 $cm^3$ $/(m^2 \cdot day \cdot atm)$.

According to the present invention, in some embodiments, the water vapor transmission rate (WVTR) of the multilayer composite film at 38 $\pm$ 0.5°C, 90% $\pm$ 5% relative humidity, and 1 standard atmosphere pressure is not more than 30 $g/(m^2 \cdot day \cdot atm)$, preferably not more than 15 $g/(m^2 \cdot day \cdot atm)$.

According to the present invention, the heat sealing strength of the multilayer composite film is not less than 3 N/15 mm, preferably not less than 5 N/15 mm.

According to the present invention, the interlaminar peeling strength of the multilayer composite film is not less than 0.5 N/15 mm, preferably not less than 1.5 N/15 mm.

The present invention also provides a method for preparing the multilayer composite film of the present invention. In some embodiments, the method comprises adding the polymer composition such as the polyglycolic acid composition of the present invention, a polyolefin and a polyolefin graft copolymer, respectively, into screw extruders, and each being melted, compressed and extruded, then forming into films separately through casting or film blowing dies, and then the multiple film layers being combined into the multilayer composite film by hot pressing. In some other embodiments, the method comprises adding the polymer composition such as the polyglycolic acid composition, a polyolefin and a polyolefin graft copolymer, into different screw extruders respectively, and each being melted and compressed, and then extruded through a co-extrusion distributor and a film-making die, cooled, and wound up to obtain the multilayer composite film. Preferably, the film product is stretched through a uniaxial stretching unit before being wound up.

The preparation of the multilayer composite film is known in the art. In the present invention, the multilayer composite film of the present invention can be prepared by using preparation methods generally known in the art.

In some preferred embodiments, the film of the present invention is prepared by a film blowing process.

According to the present invention, the screw extruder can be a single-screw extruder or a twin-screw extruder; the film-making die can be a film blowing die or a film casting die.

In some embodiments of the present invention, the film-making die is a film blowing die, and the blowing ratio during film blowing is (1 to 6):1, preferably (2 to 5):1.

The single-screw extrusion film blowing machine applicable to the present invention includes film blowing machines of different designs, such as the single-screw extrusion film blowing machine model E30P produced by Dr. Collin company, Germany.

In some embodiments, the film can be formed by a film blowing process, in which a gas (e.g., air) is used to expand a film bubble formed by extruding the polymer through an annular die. The blow-up ratio and film thickness can be controlled by adjusting the pressure of the gas in the film bubble; wherein the greater the pressure, the larger the film bubble, the lower the film thickness, and the higher the transverse orientation degree of the film. The film bubble (such as 01a in Figure 4) is then flattened by the two rollers above and is cut into two flat films and wound up. The faster the winding speed, the higher the longitudinal tensile orientation, and the film thickness decreases accordingly.

According to the present invention, the preparation process includes a uniaxial stretching unit before winding up. No matter the film is produced by film blowing or film casting, the film can be optionally oriented in one or more directions before winding up to further increase the orientation degree of the film and to reduce the thickness. For example, the film can be heated by heating with a guide roller(s) to a temperature lower than the melting point(s) of one or more polymers in the film (higher than the glass transition temperature(s)), but high enough to enable the composition to be continuously and controllably stretched. The heated and "softened" film is stretched step by step by guide rollers rotating at different speeds, so that it is stretched to the desired stretch ratio in the machine direction (MD: Machine Direction). This "uniaxial" oriented

film can then be drawn and wound up.

Figure 4 illustrates a method for forming a uniaxially oriented film. As shown in Figure 4, the blown film 01b is directed to a uniaxial stretching unit 80 (MDO unit, for example, commercially available from Marshall and Willams, Co. of Providence, RI). The MDO unit has a plurality of stretching rollers (e.g., 5 to 8), which gradually stretch the film and thin the film in the MD direction, wherein MD direction is the direction in which the film travels in the process as shown in the figure. Although the MDO unit 80 shown in Figure 4 and Figure 5 has seven rollers, it should be understood that the number of rollers can be more or less, depending on the desired stretching ratio and the degree of stretching between each roller. The film can be stretched in a single stretching unit or in multiple stretching units connected in series. It should be noted that some guide rollers in the MDO device can be operated at any speed. If necessary, some guide rollers of the MDO can be used as preheating rollers. If present, these first few rollers heat the film 01b to above the lowest glass transition temperature of the polymers (e.g., 50°C). The gradually increasing speed of adjacent rollers in the MDO plays the role of stretching the film 01b. The rotation speed of the stretching rollers determines the amount of stretching of the film and the thickness of the final film. The resulting film 01c can then be wound up and collected on a take-up roller 90.

Although not shown here, various additional potential processing and/or finishing steps known in the art, such as slitting, treating, perforating, printing graphics or laminating, can be used to process the film without departing from the spirit and scope of the present invention.

In some embodiments of the present invention, the rotation speed of the screw extruder can be 10-200 rpm; and/or the extrusion temperature can be 180°C-260°C. In some embodiments, the ratio of the diameter of the blown film bubble to the diameter of the blown film machine die (blow-up ratio) can be 1:1 to 6:1, preferably 2:1 to 5:1.

In some embodiments of the present invention, the preparation method further comprises the preparation of the polymer composition such as the polyglycolic acid composition. For example, the polyglycolic acid composition can be prepared as described herein above, and then the obtained polyglycolic acid composition is used to prepare the film of the present invention.

The multilayer composite film comprising the polyglycolic acid composition of the present invention can be used in various applications, for example, including but not limited to degradable packaging bags, pharmaceutical packaging films, cling films, agricultural films, barrier containers, etc.

The multilayer composite film of the present invention has excellent gas barrier properties and good comprehensive mechanical properties and processing properties while maintaining excellent biodegradability. The heat sealing strength of the composite film of the present invention is not less than 3 N/15 mm, the interlaminar peeling strength is not less than 0.5 N/15mm, and the oxygen transmission rate and water vapor transmission rate are not more than 100 $cm^3$ /($m^2$·day·atm) and 30 g/($m^2$·day·atm), respectively. In addition, the film preparation method of the present invention is simple, the equipment requirements are low, the production efficiency is high, a composite film with a relatively low thickness can be prepared, and the comprehensive production cost is low.

The barrier performance of the film of the present invention are far superior to films of other barrier materials or films of polyglycolic acid blends using conventional polyglycolic acids as the discontinuous phase.

The endpoints of ranges and any values disclosed herein are not limited to the precise ranges or values, and these ranges or values should be understood to include values close to these ranges or values. For numerical ranges, the endpoint values of each range, the endpoint values of each range and the individual point values, and the individual point values can be combined with each other to obtain one or more new numerical ranges, which should be considered as specifically disclosed herein.

## Examples

The present invention is described in detail below in connection with specific examples. It is necessary to point out that the following examples are only used to further illustrate the present invention and cannot be construed as limitations to the scope of protection of the present invention. Some non-essential improvements and adjustments made to the present invention by those skilled in the art based on the contents of the present invention still fall within the scope of protection of the present invention.

Raw Materials:

The raw materials used in the present invention are all commercially available.

Glycolide was purchased from Shenzhen Boli Biomaterials Co., Ltd. with a purity of ≥99.5%, a water content of ≤500 ppm, and an acid value of ≤3 mmol/kg.

Anhydrous stannous chloride, stannous octoate, 1,4-butanediol (BDO) and serinol were all purchased from Sinopharm Chemical Reagent Co., Ltd.; the purity of anhydrous stannous chloride, stannous octoate and serinol was AR grade, and the purity of 1,4-butanediol was CP grade.

Antioxidant 1010 was purchased from BASF (China) Co., Ltd., and antioxidant 626 was purchased from

Shanghai MacLean Biochemical Technology Co., Ltd., purity ≥95%.

Polyvinyl alcohol (PVA) was purchased from Chongqing Chuanwei Chemical Co., Ltd. of Sinopec Group with a brand number of 0588, a degree of polymerization of about 500, and an alcoholysis degree of about 88%.

Ethylene-vinyl alcohol copolymer (EVOH) was purchased from Kuraray Co., Ltd., Japan, with the brand name EVAL™ H171B, ethylene content of 38 mol%, melt flow rate of 1.7 g/10 min at 190°C/2.16 kg, number average molecular weight of about 18000 g/mol, total degree of polymerization of about 480, and hydroxyl content of about 0.01 mol/g EVOH.

Polyglycolide (PGA) was purchased from Corbion-Purac Company of the Netherlands. It is a GMP grade glycolide homopolymer with an average intrinsic viscosity of 1.2 dl/g.

In the present invention, measurements are conducted according to the following methods:

**Melt flow rate measurement:** The test is conducted on CEAST MF20 melt flow rate tester from Instron, USA. The test temperature is 230°C and the load weight is 2.16 kg. The preheating time is 4 min.

**Gel Permeation Chromatography (GPC):** The test instrument is PL-GPC50 gel permeation chromatograph from Agilent, USA, and the processing software is GPC offline. During the test, the mobile phase is hexafluoroisopropanol containing 5 mmol/L sodium trifluoroacetate, the flow rate is 1 mL/min, the column temperature is 40°C, the injection volume is 100 μL, the standard sample is PMMA, and the sample concentration is 1 mg/mL.

**Injection molding processing method and tensile test:** The samples are injection molded into 5A tensile specimens (thickness: 2 mm) on HAAKE MiniJet micro-injection molding machine according to GB/T 1040.2-2006. The barrel temperature and die temperature are 240°C and 50°C, respectively, the injection pressure and time are 400 bar and 5 s, respectively, and the holding pressure and time are 100 bar and 10 s, respectively. Then, the tensile test is carried out on 3344 type material testing machine from Instron, USA, with a tensile speed of 50 mm/min and a clamp spacing of 50 mm.

Melt strength test: The test is conducted on Rosand RH7 type high pressure capillary rheometer from Malvern Panalytical, China, with die model of Haul Off (diameter: 2.0 mm, length: 20 mm). The barrel push rod pressing speed is 15 mm/min, the test temperature is 235°C, the initial hauloff speed of the winding roller is 3 m/min, the final hauloff speed is 50 m/min, the speed increases at a uniform rate, the speed-up time is 3 min, and 30 data points are taken evenly.

Thickness test of each layer of multilayer film: the multilayer film is filmed with HIROX KH-1300M 3D video microscope of Japan. The film is fixed with a selfmade film fixture and is cut with a blade to observe the cross-section at a magnification of 400 times. The thickness is measured with software built-in measuring tool.

Interlaminar peeling force test: Referring to method A in GB 8808-1988, the multilayer film is cut into strips with a width of 15 mm and a length of 200 mm. After peeling off a section by 50 mm, a tensile test is carried out on 3344 type material testing machine of Instron, USA. The unpeeled part is in T-shape with the tensile direction, and the tensile speed is 300 mm/min.

Heat sealing strength: referring to QB/T2358-1998, the sample width is 15 mm, the clamp spacing is 50 mm, and the test speed is 300 mm/min.

Oxygen barrier performance test: The measurement is carried out with MOCON OX-TRAN Model 2/22 oxygen transmission rate tester. Referring to the international standard ISO 15105-2, the film sample is cut with a circular sampler and the thickness is measured. A high vacuum sealant is applied along the sealing ring on one side of the sample and the sample is fixed in the test cabinet. The test temperature is 23°C and the relative humidity (RH) is 65%.

Water vapor barrier performance test: The measurement is carried out with MOCON PERMATRAN-W Model 3/61 water vapor transmission rate tester. The film sample is tested for water vapor barrier performance by infrared detector method in accordance with international standard ISO 15106-2. A circular film sample is sampled with a sampler and is measured for thickness. The test temperature is 38 °C , the relative humidity is 90%, the pressure is 1 standard atmosphere pressure (atm), and the test time is 24 hours.

**Microscopic surface morphology characterization:** The samples are hot pressed into a thin sheet at 240°C, soaked in liquid nitrogen, quenched to break at low temperature, and gold-plated on the surface. The cross-section is photographed using Merlin field emission scanning electron microscope from Zeiss, Germany.

[Example 1]

Glycolide (water content 260 ppm), stannous octoate, polyvinyl alcohol (PVA), 1,4-butanediol (BDO), antioxidant 1010 and antioxidant 626 were uniformly mixed in mass proportion of 100:0.1:0.015:0.035:0.5:0.3, and then extruded and pelleted using a Labtech parallel co-rotating twin-screw extruder (screw diameter: 20 mm, length to diameter ratio: 40). The extruder had 11 sections from the feed port to the die, numbered 1 to 11, of which the first section only served to feed the materials and was not heated. The temperatures of sections 2 to 11 of the extruder were 160°C, 200°C, 220°C, 220°C, 220°C, 220°C, 220°C, 230°C, 235°C and 240°C, respectively. The feed rate was 3 kg/h, the screw rotation speed was 150 rpm, and the average residence time was about 3 min. The content of hydroxyl in PVA in the raw materials was 2.69 μmol/g

glycolide, and the content of active hydrogen in the small molecule initiator was 22.22 μmol/g glycolide. According to formula (b) in the specification, the degree of polymerization p of polyglycolic acid in the graft copolymer was greater than 44.

[Example 2]

The synthesis method was the same as that of Example 1, except that the macromolecular initiator was changed to ethylene-vinyl alcohol copolymer (EVOH), and the proportion of glycolide (water content 210 ppm), stannous octoate, EVOH, 1,4-butanediol (BDO), antioxidant 1010 and antioxidant 626 was set to be 100 : 0.1 : 0.02 : 0.04 : 0.5 : 0.5. The temperature was changed to: 160 °C, 200°C, 220°C, 220 °C, 220°C, 220°C, 220°C, 220°C, 220°C and 220°C. The hydroxyl content from EVOH in the raw materials was 3.28 μmol/g glycolide, and the active hydrogen content in the small molecule initiator in the raw materials was 20.56 μmol/g glycolide. According to formula (b) in the specification, the degree of polymerization p of polyglycolic acid in the graft copolymer was greater than 190.

[Example 3]

The synthesis method was the same as that of Example 1, except that the amount of PVA was adjusted to 0.05 phr, 1,4-butanediol (BDO) was not added, and the amount of antioxidant was slightly adjusted, that was, the mass proportion of glycolide (water content 180 ppm) and antioxidant 626 was changed to 100 : 0.5. The hydroxyl content from PVA in the raw materials was 8.95 μmol/g glycolide, and the active hydrogen content in the small molecule initiator in the raw materials was 10.00 μmol/g glycolide. According to formula (b) in the specification, the degree of polymerization p of polyglycolic acid in the graft copolymer was greater than 83.

[Example 4]

The synthesis method was the same as that of Example 2, except that the equipment was changed to a Eurolab parallel co-rotating twin-screw extruder (screw diameter: 16 mm, length to diameter ratio 40), the water content of glycolide was 240 ppm, and the amount of catalyst was changed to 0.03 phr anhydrous stannous chloride, the amount of ethylene-vinyl alcohol copolymer (EVOH) was changed to 1 part by mass (phr), and 1,4-butanediol was not added, the screw rotation speed was changed to 100 rpm, the temperature was changed to: 120°C, 180°C, 230°C, 230°C, 230°C, 230°C, 230°C, 230°C, 230°C, 210°C, the feed rate was changed to 1 kg/h, and the average residence time was about 6 min. The hydroxyl content from EVOH in the raw materials was 0.164 mmol/g glycolide, and the active hydrogen content in the small molecule initiator in the raw materials was 13.33 μmol/g glycolide. According to formula (b) in the specification, the degree of polymerization p of polyglycolic acid in the graft copolymer was greater than 292.

[Example 5]

The synthesis method was the same as that of Example 4, except that the amount of ethylene-vinyl alcohol copolymer (EVOH) was changed to 3 phr. The content of hydroxyl in EVOH in the raw material was 0.492 mmol/g glycolide, and the active hydrogen content in the small molecule initiator in the raw material was 13.33 μmol/g glycolide. According to formula (b) in the specification, the degree of polymerization p of polyglycolic acid in the graft copolymer was greater than 67.

[Example 6]

The synthesis method was the same as that of Example 4, except that the amount of ethylene-vinyl alcohol copolymer (EVOH) was changed to 5 phr, the screw rotation speed was changed to 50 rpm, and the average residence time was about 7 min. The hydroxyl content from EVOH in the raw material was 0.82 mmol/g glycolide, and the active hydrogen content in the small molecule initiator in the raw material was 13.33 μmol/g glycolide. According to formula (b) in the specification, the degree of polymerization p of polyglycolic acid in the graft copolymer was greater than 67.

[Example 7]

The synthesis method was the same as that of Example 4, except that no antioxidant was added. The hydroxyl content from EVOH in the raw material was 0.164 mmol/g glycolide, and the active hydrogen content in the small molecule initiator in the raw material was 13.33 μmol/g glycolide. According to formula (b) in the specification, the degree of polymerization p of polyglycolic acid in the graft copolymer was greater than 309.

[Example 8]

The synthesis method was the same as that of Example 2, except that serinol was used instead of 1,4-butanediol, and the proportions of the macromolecular initiator and the small molecule initiator were changed to 0.02 phr and 0.04 phr, and the water content of glycolide was 220 ppm. The hydroxyl content from EVOH in the raw materials was 3.28 μmol/g glycolide, and the active hydrogen content in the small molecule initiator in the raw materials was 25.41 μmol/g glycolide. According to formula (b) in the specification, the degree of polymerization p of polyglycolic acid in the graft copolymer was greater than 155.

[Example 9]

The synthesis method was the same as that of Example 2, except that the proportions of glycolide (water content 200 ppm), stannous octoate, EVOH, 1,4-butanediol, antioxidant 1010 and antioxidant 626 was set to be 100 : 0.1 : 0.015 : 0.035 : 0.3 : 0.6. The hydroxyl content from EVOH in the raw materials was 2.46 μmol/g glycolide, and the active hydrogen content in the small molecule initiator in the raw materials was 18.89 μmol/g glycolide. According to formula (b) in the specification, the degree of polymerization p of polyglycolic acid in the graft copolymer was greater than 103.

[Example 10]

The synthesis method was the same as that of Example 4, except that the catalyst was changed to stannous octoate, the proportions of glycolide (water content 180 ppm), stannous octoate, EVOH, 1,4-butanediol, antioxidant 1010 and antioxidant 626 was set to be 100 : 0.1 : 0.005 : 0.045 : 0.3 : 0.6, and the feed rate and screw rotation speed were changed to 3 kg/h and 150 rpm respectively, and the temperatures were changed to: 160°C, 200°C, 220°C, 220°C, 220°C, 220°C, 220°C, 230°C, 235°C and 240°C. The hydroxyl content from EVOH in the raw material was 0.895 μmol/g glycolide, and the active hydrogen content in the small molecule initiator in the raw material was 20.00 μmol/g glycolide. According to formula (b) in the specification, the degree of polymerization p of polyglycolic acid in the graft copolymer was greater than 166.

[Example 11]

The synthesis method was the same as that of Example 4, except that the water content of the raw material glycolide was 150 ppm, the catalyst was changed to stannous octoate, and the macromolecular initiator was changed to PVA. The hydroxyl content from PVA in the raw material was 0.179 mmol/g glycolide, and the active hydrogen content in the small molecule initiator in the raw material was 8.33 μmol/g glycolide. According to formula (b) in the specification, the degree of polymerization p of polyglycolic acid in the graft copolymer was greater than 53.

[Comparative Example 1]

The synthesis method was the same as that of Example 10, except that no macromolecular initiator was used, and the proportions of glycolide (water content 180 ppm), stannous octoate, 1,4-butanediol, antioxidant 1010 and antioxidant 626 was changed to be 100 : 0.1 : 0.05 : 0.3 : 0.6. The active hydrogen content of the small molecule initiator in the raw material was 21.11 μmol/g glycolide.

[Comparative Example 2]

Commercially available pure polyglycolide (PGA), a GMP-grade glycolide homopolymer purchased from Corbion-Purac, Netherlands, with an average intrinsic viscosity of 1.2 dl/g.

[Comparative Example 3]

The synthesis method was the same as that of Example 11, except that the amount of PVA was increased to 10 phr. The hydroxyl content from PVA in the raw materials was 1.79 mmol/g glycolide, and the active hydrogen content in the small molecule initiator in the raw material was 8.33 μmol/g glycolide. According to formula (b) in the specification, the degree of polymerization p of polyglycolic acid in the graft copolymer was greater than 10.

[Comparative Example 4]

The multimodal molecular weight distribution polyglycolic acid composition obtained in Example 11 and the

commercially available PGA homopolymer in Comparative Example 2 were physically blended at a mass ratio of 1:1. The blending equipment was a Polylab™ internal mixer, the rotor was a Roller-type rotor, the rotation speed was set to be 50 rpm, the temperature was set to be 240°C, and the time was set to be 5 min.

The proportions of raw material of the above Examples and Comparative Examples are shown in Table 1.

Table 1

| | Type and amount of catalysts | Type and amount of macromolecular initiator | Type and amount of small molecule initiator added | Water content in glycolide (ppm; by weight) | Amount of antioxidant 1010 (phr) | Amount of antioxidant 626 (phr) |
|---|---|---|---|---|---|---|
| Example 1 | 0.1 phr stannous octoate | 0.015 phr PVA | 0.035 phr BDO | 260 | 0.5 | 0.3 |
| Example 2 | | 0.02 phr EVOH | 0.04 phr BDO | 210 | 0.5 | 0.5 |
| Example 3 | | 0.05 phr PVA | 0 | 180 | 0.5 | 0.5 |
| Example 4 | 0.03 phr anhydrous stannous chloride | 1 phr EVOH | 0 | 240 | 0.3 | 0.6 |
| Example 5 | | 3 phr EVOH | 0 | 240 | 0.3 | 0.6 |
| Example 6 | | 5 phr EVOH | 0 | 240 | 0.3 | 0.6 |
| Example 7 | | 1 phr EVOH | 0 | 240 | 0 | 0 |
| Example 8 | 0.1 phr stannous octoate | 0.02 phr EVOH | 0.04 phr serinol | 220 | 0.5 | 0.5 |
| Example 9 | | 0.015 phr EVOH | 0.035 phr BDO | 200 | 0.3 | 0.6 |
| Example 10 | | 0.005 phr EVOH | 0.045 phr BDO | 180 | 0.3 | 0.6 |
| Example 11 | 0.03phr stannous octoate | 1 phr PVA | 0 | 150 | 0.3 | 0.6 |
| Comparative Example 1 | 0.1 phr stannous octoate | 0 | 0.05 phr BDO | 180 | 0.3 | 0.6 |
| Comparative Example 3 | 0.03 phr stannous octoate | 10 phr PVA | 0 | 150 | 0.3 | 0.6 |
| Note: The proportions in above table are all based on 100 parts by mass (phr) glycolide monomer; the total small molecule initiators include both the added small molecule initiator and the water contained in the glycolide. | | | | | | |

[Test Example 1]

The molecular weights of some Examples and Comparative Examples were characterized by GPC. The analysis results are shown in Table 2. The GPC curves of some Examples and Comparative Examples are shown in Figure 1.

Table 2

| | Polymer Type | Number average molecular weight (g/mol) | Weight average molecular weight (g/mol) | Molecular weight polydispersity index | Mass proportion* (%) |
|---|---|---|---|---|---|
| Example 1 | Graft copolymer | 1159029 | 1495459 | 1.29 | 7.93 |
| | Homopolymer | 81009 | 118984 | 1.47 | 92.07 |
| | Overall | 84765 | 187008 | 2.21 | 100 |

(continued)

| | Polymer Type | Number average molecular weight (g/mol) | Weight average molecular weight (g/mol) | Molecular weight polydispersity index | Mass proportion* (%) |
|---|---|---|---|---|---|
| Example 2 | Graft copolymer | 3308919 | 4495149 | 1.35 | 6.06 |
| | Homopolymer | 66870 | 190679 | 2.85 | 93.94 |
| | Overall | 109481 | 375278 | 3.43 | 100 |
| Example 3 | Graft copolymer | 2144437 | 2569276 | 1.20 | 7.42 |
| | Homopolymer | 112415 | 171978 | 1.53 | 92.58 |
| | Overall | 120059 | 289752 | 2.41 | 100 |
| Example 4 | Graft copolymer | 5078486 | 6359161 | 1.25 | 29.80 |
| | Graft copolymer | 1338848 | 1486656 | 1.11 | 20.90 |
| | Homopolymer | 77473 | 95379 | 1.23 | 49.30 |
| | Overall | 107261 | 1218545 | 11.36 | 100 |
| Example 5 | Graft copolymer | 1182018 | 1403945 | 1.19 | 39.87 |
| | Homopolymer | 228826 | 299866 | 1.31 | 60.13 |
| | Overall | 306564 | 656441 | 2.14 | 100 |
| Example 6 | Graft copolymer | 1177260 | 1456011 | 1.24 | 51.86 |
| | Homopolymer | 257230 | 316579 | 1.23 | 48.14 |
| | Overall | 392203 | 819834 | 2.09 | 100 |
| Example 7 | Graft copolymer | 5368146 | 6763753 | 1.26 | 28.62 |
| | Graft copolymer | 1404803 | 1587239 | 1.13 | 21.23 |
| | Homopolymer | 112570 | 140553 | 1.25 | 50.15 |
| | Overall | 106923 | 1287695 | 12.04 | 100 |
| Example 8 | Graft copolymer | 2694443 | 3666994 | 1.36 | 15.58 |
| | Homopolymer | 66837 | 162771 | 2.44 | 84.42 |
| | Overall | 93339 | 514350 | 5.51 | 100 |
| Example 9 | Graft copolymer | 1805926 | 2011475 | 1.11 | 7.42 |
| | Homopolymer | 124956 | 199216 | 1.59 | 92.58 |
| | overall | 128236 | 268237 | 2.09 | 100 |
| Example 10 | Graft copolymer | 2888592 | 3112035 | 1.08 | 1.91 |
| | Homopolymer | 121612 | 224955 | 1.85 | 98.09 |
| | Overall | 123356 | 259297 | 2.10 | 100 |
| Example 11 | Graft copolymer | 1382154 | 1842449 | 1.33 | 49.68 |
| | Homopolymer | 145707 | 230591 | 1.58 | 50.32 |
| | Overall | 225840 | 567354 | 2.51 | 100 |
| Comparative Example 1 | Homopolymer | 124873 | 197798 | 1.58 | - |
| Comparative Example 2 | Homopolymer | 94800 | 149000 | 1.57 | - |

(continued)

| | Polymer Type | Number average molecular weight (g/mol) | Weight average molecular weight (g/mol) | Molecular weight polydispersity index | Mass proportion* (%) |
|---|---|---|---|---|---|
| Comparative Example 3 | Graft copolymer | 304041 | 378981 | 1.25 | 17.17 |
| | Homopolymer | 25504 | 41348 | 1.62 | 82.83 |
| | Overall | 28524 | 82157 | 2.88 | 100 |
| Comparative Example 4 | Graft copolymer | 1145884 | 1437230 | 1.25 | 17.44 |
| | Homopolymer | 98350 | 168570 | 1.71 | 82.56 |
| | Overall | 89570 | 321860 | 3.59 | 100 |
| *Calculated from the integral area ratio of the GPC curve. The ordinate and abscissa of the GPC curve are related to the amount of substance and molecular weight of the polymer, respectively, so the mass of corresponding component can be obtained by integrating the curve, that is, the ratio of the integral area to the total integral area is the corresponding mass proportion. | | | | | |

Table 2 lists the analysis results of each peak calculated separately after peak separation, as well as the overall molecular weight and its distribution when all peaks are analyzed as a whole, and the proportion of high molecular weight peak refers to the percentage of the area of a peak with a weight average molecular weight greater than 500,000 g/mol relative to the total peak area. As can be seen from Table 2, multiple peaks appear in all Examples, and the weight average molecular weights of the peaks with larger molecular weight are all greater than 1,000,000 g/mol, and the overall molecular weights are also all greater than 180,000 g/mol; the overall molecular weight distributions are also much wider than those of the Comparative Examples, which is specifically reflected in the overall molecular weight polydispersity indexes of being greater than 2, wherein, in particulr, the overall molecular weight polydispersity index of Example 4 is 11.36.

In addition, as can be seen from Table 2, the high molecular weight portion with a weight average molecular weight greater than 500,000 g/mol accounts for about 1-53% of the total, with the highest proportion being about 52%. It can be seen that the addition of a small amount of PVA or EVOH in the present invention can form a large amount of high molecular weight polyglycolic acid graft copolymer, and a multimodal molecular weight distribution polyglycolic acid composition is obtained in situ from the polymerization reaction. Although the obtained product has a multimodal distribution and is not entirely ultra-high molecular weight polyglycolic acid graft copolymer, the overall molecular weight of the obtained product in general is still much higher than that of the polyglycolic acid in the prior art.

As can be seen from Comparative Example 3, when the amount of macromolecular initiator used is too high, the content of hydroxyl in the raw material is too high and thus too many active sites are provided, which in turn leads to a decrease in the molecular weight of the final product and it is impossible to achieve the effect of improving the melt strength.

[Test Example 2]

The melt flow rate test was performed on some Examples and Comparative Examples, and the test results are shown in Table 3.

Table 3

| | MFR (g/10 min) |
|---|---|
| Example 1 | 9.9 |
| Example 2 | 4.3 |
| Example 3 | 1.4 |
| Example 4 | <0.1 |
| Example 5 | <0.1 |
| Example 6 | <0.1 |
| Example 9 | 5.4 |

(continued)

| | MFR (g/10 min) |
|---|---|
| Example 10 | 7.7 |
| Example 11 | <0.1 |
| Comparative Example 1 | 26.2 |
| Comparative Example 2 | 41.1 |
| Comparative Example 3 | >500 |

As can be seen from Table 3, the melt flow rates of each Example are significantly lower than that of Comparative Example 2, and the melt flow rates of some Examples are even too small to be detected, that is, they are lower than 0.1 g/10 min, the lower detection limit of the MFR instrument. It can be seen that the polymer of the present invention has a lower melt flow rate, which is more conducive to its application in the fields of casting and film blowing.

In addition, it can be seen from Comparative Example 3 that when the amount of PVA used as macromolecular initiator is too large, the melt flow rate begins to increase instead. The MFR of Comparative Example 3 is so large that it exceeds the upper detection limit of the instrument under this condition (~500 g/10 min).

[Test Example 3]

Mechanical properties were tested for some Examples and Comparative Examples. The samples were injection molded into 5A tensile specimens (thickness: 2 mm) on HAAKE MiniJet microinjection molding machine according to GB/T 1040.2-2006. Then, tensile test was performed on 3344 type material testing machine of Instron, USA, with a tensile speed of 50 mm/min and a clamp spacing of 50 mm. The typical stress-strain curves of the tensile test (results of individual typical specimens) are shown in Figure 2; the specific results (average values of 5 specimens tested) are shown in Table 4.

Table 4

| | Tensile Strength (MPa) | Tensile modulus (GPa) | Elongation at break (%) | Fracture Energy ($10^4$ J/$m^2$) |
|---|---|---|---|---|
| Example 1 | 132.1 | 2.83 | 30.1 | 78.8 |
| Example 3 | 122.2 | 2.77 | 43.9 | 98.8 |
| Example 8 | 128.0 | 2.69 | 37.9 | 82.5 |
| Example 9 | 125.1 | 2.56 | 74.4 | 126.3 |
| Comparative Example 1 | 122.0 | 2.56 | 8.6 | 17.5 |
| Comparative Example 2 | 126.3 | 2.55 | 6.9 | 13.8 |
| Comparative Example 4 | 83.8 | 2.77 | 4.6 | 5.0 |

As can be seen from Table 4, the multimodal molecular weight distribution polyglycolic acid composition obtained by the present invention has significantly improved toughness compared with conventional polyglycolic acids. Figure 2 shows that the injection molded specimen of Comparative Example 2 (PGA homopolymer) exhibits a typical brittle fracture, with the elongation at break and the fracture energy being only 6.9% and 13.8 * $10^4$ J/$m^2$, respectively. The injection molded specimen of Example 9 of the present invention exhibits a ductile fracture, with a high elongation at break and a long yield plateau (about 22% to 80%) on the tensile stress-strain curve. The polyglycolic acid tensile properties with this special high-toughness and yielding property is an unexpected discovery for polyglycolic acid which is completely not expectable.

The strength and modulus of Example 9 are comparable to those of Comparative Example 2, but the elongation at break and the fracture energy of the polymer of the present invention are increased by one order of magnitude, with the elongation at break and the fracture energy being 74% and 126.3 * $10^4$ J/$^2$, respectively. Although the elongations at break of Example 1 and Example 3 are lower than that of Example 9, the tensile moduli are slightly higher than that of Example 9, and all are significantly better than those of Comparative Example 1 and Comparative Example 2. The other Examples are not significantly inferior to Example 3.

In addition, from the comparison between Comparative Example 4 (blended sample) and Example 8 with similar molecular weight and distribution, it can be seen that the mechanical properties of Example 8 are significantly higher than

those of Comparative Example 4, which indicates that the composition prepared in situ (Example 8) has better uniformity than the composition obtained by physical blending (Comparative Example 4). In fact, during blending, since the viscosity of the multimodal PGA raw material (Example 11) in Comparative Example 4 is too high, it is difficult to quickly mix it with another polymer by melt stirring. When the multiple phases of the blend are mixed unevenly, one of the most obvious manifestations on the macro scale is the obvious decrease in mechanical properties due to stress concentration.

[Test Example 4]

Melt drawing tests were conducted on some Examples and Comparative Examples at 235°C to characterize their melt strengths. The test results are shown in Table 5 and Figure 3.

Table 5

| | Melt Strength (cN) |
|---|---|
| Example 1 | 20 |
| Example 9 | 9 |
| Comparative Example 1 | 3 |
| Comparative Example 2 | 0.3 |
| Comparative Example 3 | < 0.1 |

As can be seen from Table 5, the melt strengths of the polyglycolic acid compositions obtained in the present invention (Example 1 and Example 9) are significantly increased compared with the polyglycolic acid homopolymers (Comparative Example 1 and Comparative Example 2). The melt strength is increased from 0.3 cN (Comparative Example 2) to 20 cN (Example 1), and the increase is more than 60 times, which fully demonstrates that the polyglycolic acid composition of the present invention has a unique and unexpected high melt strength. The other Examples are not significantly inferior to Example 9.

[Test Example 5]

Comparative Example 4 (blended sample) and Example 8 (in-situ synthesized sample) with similar molecular weight and distribution were prepared into thin sheets, quenched to break at low temperature, and the microscopic morphology of cross section thereof was characterized by scanning electron microscopy. The results are shown in Figure 8 (Comparative Example 4) and Figure 9 (Example 8). As shown in Figure 8, due to the too high viscosity of the multi-modal PGA raw material (Example 11) in Comparative Example 4, when mixed, the low-boiling point compounds such as air and water carried in the raw materials are difficult to remove during the blending process, and defects are formed so as to cause stress concentration, which is one of the important reasons for the decline in mechanical properties. As can be seen from Figure 9, the surface of Example 8 obtained by in-situ synthesis is relatively rough, but there are no obvious defects. The rough surface is based on the fact that, due to its better toughness, Example 8 still shows ductile fracture at the same low temperature, which is a manifestation of better mechanical properties.

Examples for films are provided below.

[Example A1]

As shown in Figure 4, a multilayer film was prepared using a Labtech LCR-33 HD multilayer co-extrusion blown film machine. The low-density polyethylene (Dow LDPE 310E) used for the protective layer, the maleic anhydride grafted linear low-density polyethylene (Dow BYNEL™ 41E687B) used for the tie layer, and the polyglycolic acid composition of Example 9 used for the barrier layer were added to the hoppers 10a, 10b, and 10c of three single-screw extruders, respectively, melted and extruded to the melt pumps to increase pressure, distributed by the co-extrusion distributor, and then extruded from the film blowing die, and finally drawn, cooled, stretched, and wound up to obtain the polyglycolic acid multilayer composite film with high barrier performance. The screw rotation speeds of the three single-screw extruders 20a, 20b and 20c were 58 rpm, 42 rpm and 25 rpm, respectively. The temperatures of the extruder, melt pump and die were set to be 180°C, 230°C, 230°C and 230°C, respectively. The rotation speeds of the three melt pumps 30a, 30b and 30c were 30 rpm, 15 rpm and 10 rpm, respectively. The outlet pressures of the melt pumps were 120 bar, 110 bar and 47 bar, respectively. The total thickness of the film was about 80 μm.

[Example A2]

The preparation method was similar to that of Example A1, except the material of the barrier layer was changed to the polyglycolic acid composition of Example 1, and the screw rotation speeds of the three single-screw extruders 20a, 20b and 20c were set to be 50 rpm, 42 rpm and 35 rpm, respectively, the rotation speeds of the three melt pumps 30a, 30b and 30c were set to be 30 rpm, 15 rpm and 25 rpm, respectively, and the outlet pressures of the melt pumps were 120 bar, 110 bar and 58 bar, respectively. The total thickness of the film was about 88 μm.

[Example A3]

The preparation method was similar to that of Example A2, except that the screw rotation speeds of the three single-screw extruders 20a, 20b and 20c were set to be 40 rpm, 40 rpm and 30 rpm, respectively, the rotation speeds of the three melt pumps 30a, 30b and 30c were set to be 15 rpm, 15 rpm and 5 rpm, respectively, and the outlet pressures of the melt pumps were 102 bar, 97 bar and 58 bar, respectively. The total thickness of the film was about 50 μm.

[Example A4]

The preparation method was similar to that of Example A2, except that the screw rotation speeds of the three single-screw extruders 20a, 20b and 20c were set to be 40 rpm, 40 rpm and 20 rpm, respectively, the rotation speeds of the three melt pumps 30a, 30b and 30c were set to be 15 rpm, 15 rpm and 3 rpm, respectively, and the outlet pressures of the melt pumps were 102 bar, 99 bar and 51 bar, respectively. The total thickness of the film was about 50 μm.

[Example A5]

The preparation method was similar to that of Example A2, except that the screw rotation speeds of the three single-screw extruders 20a, 20b and 20c were set to be 40 rpm, 20 rpm and 20 rpm, respectively, the rotation speeds of the three melt pumps 30a, 30b and 30c were set to be 15 rpm, 15 rpm and 1 rpm, respectively, and the outlet pressures of the melt pumps were 95 bar, 62 bar and 39 bar, respectively. The total thickness of the film was about 80 μm.

[Comparative Example A1]

The preparation method was similar to that of Example A1, except the material of the barrier layer was changed to polyglycolic acid in Comparative Example 1. However, since the melt properties (melt strength and melt toughness) of Comparative Example 1 were too poor, the film bubble was easy to break and continuous film blowing was impossible.

[Comparative Example A2]

The preparation method was similar to that of Example A1, except without the barrier layer. That is, low-density polyethylene (Dow LDPE 310E) was used to replace the polyglycolic acid composition of Example 9 and was put into the hopper 10c, and other process conditions remained unchanged.

[Comparative Example A3]

The preparation method was similar to that of Example A1, except without the tie layer, that is, low-density polyethylene (Dow LDPE 310E) was used to replace maleic anhydride grafted linear low-density polyethylene (Dow BYNEL ™ 41E687B) and was put into the hopper 10b, and other process conditions remained unchanged.

[Comparative Example A4]

The polyglycolic acid pellets obtained in Example 9 was processed by the single-screw extruder of model E30P (screw diameter 30 mm, length to diameter ratio: 30 : 1) of Dr. Collin, Germany and the carollary film blowing machine of model BL 180/600 of the same company, and after melting, extrusion, drawing, cooling, stretching and winding, a monolayer polyglycolic acid film was obtained. The screw rotation speed of the extruder was 50 rpm, and the temperatures of the extruder and the die were set to be 180°C, 230°C 230°C and 230°C, respectively. The film thickness was 24 μm.

[Test Example A1]

The multilayer film obtained in Example A2 was cut with a blade and placed under an optical microscope to

observe its cross-sectional structure, and the obtained photo was shown in Figure 7. As shown in Figure 7, the multilayer film is a 5-layer composite film as designed in Figure 6: the lighter color layer at the middle is polyglycolic acid composition barrier layer with a thickness of about 15 μm, the outermost layers with lighter color and white reflections are polyethylene protective layers with a single-layer thickness of about 20 μm, and the darker layers between the barrier layer and the protective layers are tie layers with a single-layer thickness of about 15 μm.

[Test Example A2]

The interlaminar peeling force test was carried out on the films of some Examples and Comparative Example A3, with specimen width of 15 mm. The test results are listed in Table A2.

Table A2

| | Interlaminar peeling force (N/15mm) |
|---|---|
| Example A1 | 3.61 |
| Example A2 | 1.55 |
| Example A3 | 1.99 |
| Example A4 | 2.06 |
| Comparative Example A3 | ~0.1 |

Comparing the interlaminar peeling forces of the Examples in Table A2 with that of Comparative Example A3 (a multilayer film without a tie layer), it can be seen that the adhesion between the layers is significantly improved after the tie layer is added, and the interlaminar peeling force is increased by at least one order of magnitude, up to 3.61 N/15 mm, and the layers are not easy to peel off.

[Test Example A3]

The heat sealing strength test was carried out on the Examples and Comparative Example A4, with specimen width of 15 mm. The test results are listed in Table A3.

Table A3

| | Heat sealing strength (N/15 mm) |
|---|---|
| Example A1 | ≥6.63 |
| Example A2 | ≥5.63 |
| Example A3 | ≥5.26 |
| Example A4 | ≥5.81 |
| Example A5 | ≥6.66 |
| Comparative Example A4 | not heat sealable |
| Note: Since the heat seal strength is greater than the interlaminar peeling force, the layers were actually separated during the test and the accurate heat seal strength cannot be obtained. The maximum load was used here as the lower limit of the heat seal strength. | |

As can be seen from Table A3, the use of polyolefin as the outer layer in the present invention not only protects the barrier layer of the polyglycolic acid composition, but also significantly improves the heat sealing performance of the multilayer film, from being completely not heat sealable to a heat sealing strength of at least 5 N/15 mm.

[Test Example A4]

Barrier performance of the Examples and Comparative Example A2 were tested. The test temperature for oxygen barrier performance was 23°C, the relative humidity (RH) was 65%; the test temperature for water vapor barrier performance was 38°C, the relative humidity was 90%, the pressure was 1 standard atmosphere pressure (atm), and the test time was 24 h. The test results are shown in Table A4.

Table A4

| | Example A1 | Example A2 | Example A3 | Example A4 | Example A5 | Comparative Example A2 |
|---|---|---|---|---|---|---|
| Thickness($\mu$m) | 80 | 88 | 50 | 50 | 80 | 80 |
| Oxygen Transmission Rate (OTR) ($cm^3/(m^2 \cdot day \cdot atm)$) | 15.6 | 19.8 | 2.36 | 1.52 | 7.06 | >1200 |
| Water Vapor Transmission Rate WVTR ($g/(m^2 \cdot day \cdot atm)$) | 8.47 | 10.36 | 7.85 | 8.62 | 4.45 | 6.10 |

As shown in Table A4, the oxygen barrier and water barrier properties of each Example are excellent; the water vapor transmission rates are comparable to that of the polyethylene multilayer film (Comparative Example A2), while the oxygen transmission rates are significantly lower than that of the polyethylene multilayer film (Comparative Example A2), and the lowest value can be 1.52 $cm^3/(m^2 \cdot day \cdot atm)$, which is close to the oxygen barrier property of pure polyglycolic acid. That is, the multilayer composite film of the present invention not only significantly improves the oxygen barrier property of the multilayer film by virtue of the high barrier property of the multimodal molecular weight distribution polyglycolic acid composition, but also prevents the multimodal molecular weight distribution polyglycolic acid from contacting with water (thereby decreasing its degradation rate and extending its shelf life and service life) by the inherent hydrophobicity and water barrier property of the polyolefin.

It should be noted that the examples described above are only used to illustrate the present invention and do not constitute any limitation to the present invention. The present invention has been described with reference to typical examples, but it should be understood that the words used therein are descriptive and explanatory words, rather than restrictive words. The present invention can be modified as specified within the scope of the claims of the present invention, and the present invention can be modified without departing from the scope and spirit of the present invention. Although the present invention described therein relates to specific methods, materials and examples, it does not mean that the present invention is limited to the specific examples disclosed therein. On the contrary, the present invention can be extended to all other methods and applications with the same functions.

All publications, patent applications, patents and other references mentioned in this specification are incorporated herein by reference. Unless otherwise defined, all technical and scientific terms used in this specification have the meanings conventionally understood by those skilled in the art. In the event of a conflict, the definition in this specification shall prevail.

When this specification uses the prefix "well-known to those skilled in the art", "prior art" or similar terms to introduce materials, substances, methods, steps, devices or components, etc., the objects introduced by the prefix cover those commonly used in the art when this application is filed, but also include those that are not commonly used at present but will become recognized in the art as being suitable for similar purposes.

The endpoints of ranges and any values disclosed herein are not limited to the precise ranges or values, and these ranges or values should be understood to include values close to these ranges or values. For numerical ranges, the endpoint values of each range, the endpoint values of each range and the individual point values, and the individual point values can be combined with each other to obtain one or more new numerical ranges, which should be considered as specifically disclosed herein. Herein, in principle, each technical solution can be combined with each other to obtain a new technical solution, which should also be considered as specifically disclosed herein.

In the context of the present specification, except those explicitly stated, any matters or items not mentioned directly adopt those known in the art without any changes.

Moreover, any embodiment described herein can be freely combined with one or more other embodiments described herein, and the technical solutions or technical ideas formed thereby are deemed to be part of the original disclosure or original record of the present invention, and should not be regarded as new content that has not been disclosed or anticipated herein, unless a person skilled in the art considers that the combination is obviously unreasonable.

## Claims

1. A polymer composition comprising a polyester graft copolymer and a polyester homopolymer, wherein the molecular weight of the polyester graft copolymer is higher than the molecular weight of the polyester homopolymer, and wherein the polyester graft copolymer is represented by the following formula A:

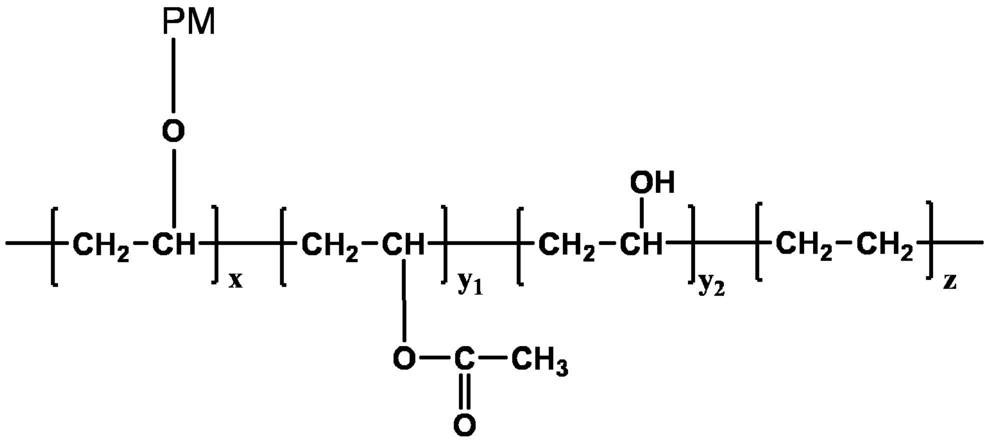

Formula A

in formula A, x, $y_1$, $y_2$ and z each independently represent the degree of polymerization, PM represents a polyester chain and the degree of polymerization of the polyester chain is p, wherein x and p are each independently a number greater than zero, $y_1$, $y_2$ and z are each independently zero or a number greater than zero, and wherein the polyester homopolymer and the polyester chains in the polyester graft copolymer are derived from the same monomer(s) for polyester.

2. The polymer composition according to claim 1, wherein the polyester graft copolymer and the polyester homopolymer are formed in situ simultaneously.

3. The polymer composition according to any one of claims 1 to 2, wherein the polyester homopolymer and the polyester chains in the polyester graft copolymer are derived from a hydroxy acid monomer or a derivative of a hydroxy acid monomer; preferably, the polyester homopolymer and the polyester chain in the polyester graft copolymer are derived from a lactide monomer, a lactone monomer or a combination thereof; preferably, the lactide monomer is a lactide monomer based on α-hydroxy acid or β-hydroxy acid, and more preferably, the lactide monomer is selected from the group consisting of glycolide, lactide, butyrolactide, valerolactide, caprolactide and any combination thereof; preferably, the lactone monomer is selected from the group consisting of β-butyrolactone, δ-valerolactone, ε-caprolactone, β-propiolactone, β-valerolactone, γ-butyrolactone, y-valerolactone, γ-octalactone, β-methyl-δ-valerolactone, δ-stearolactone, 2-methyl-ε-caprolactone, 4-methyl-ε-caprolactone, ε-octalactone, ε-palmitolactone and any combination thereof, and more preferably the lactone monomer is selected from the group consisting of β-butyrolactone, δ-valerolactone, ε-caprolactone and any combination thereof; most preferably, the monomer is selected from the group consisting of methyl glycolate, glycolic acid, glycolide and any combination thereof.

4. The polymer composition according to any one of claims 1 to 3, wherein when the polyester graft copolymer comprises a polyvinyl alcohol main chain, the amount of the polyvinyl alcohol main chain in the polyester graft copolymer is 0.001 to 5 parts by mass, preferably 0.005 to 3 parts by mass, preferably 0.005 to 1 parts by mass, more preferably 0.01 to 1 parts by mass, relative to 100 parts by mass of the polyesters in the polyester graft copolymer and the polyester homopolymer; and/or, wherein when the polyester graft copolymer comprises an ethylene-vinyl alcohol copolymer main chain, the amount of the ethylene-vinyl alcohol copolymer main chain in the polyester graft copolymer is 0.001 to 10 parts by mass, preferably 0.002 to 8 parts by mass, preferably 0.005 to 7 parts by mass, more preferably 0.01 to 5 parts by mass, relative to 100 parts by mass of the polyesters in the polyester graft copolymer and the polyester homopolymer; and/or,
wherein, relative to the total mass of the polyester graft copolymer and the polyester homopolymer, the content of the polyester graft copolymer is 0.1 mass% to 80.0 mass%, preferably 0.5 mass% to 55.0 mass%, more preferably 1.0 mass% to 30.0 mass%, and the content of the polyester homopolymer is 20 mass% to 99.9 mass%, preferably 45.0 mass% to 99.5 mass%, more preferably 70.0 mass% to 99.0 mass%.

5. The polymer composition according to any one of claims 1 to 4, **characterized in that**:

the overall weight average molecular weight of the polymer composition is 180,000 to 1,500,000 g/mol, preferably 200,000 to 1,500,000 g/mol, more preferably 250,000 to 500,000 g/mol; and/or,
the overall molecular weight polydispersity index of the polymer composition is 1.5 to 20.0, preferably 2.0 to 12.0,

preferably 2.0 to 6.0, more preferably 2.0 to 3.5; and/or,
the number of peaks in the molecular weight distribution of the polymer composition is at least 2, preferably 2 to 4; and/or,
the weight average molecular weight of the polyester graft copolymer is 500,000 to 10,000,000 g/mol, preferably 1,000,000 to 6,000,000 g/mol; and/or,
the molecular weight polydispersity index of the polyester graft copolymer is 1.0 to 3.0, preferably 1.1 to 1.5; and/or,
the weight average molecular weight of the polyester homopolymer is 50,000 to 350,000 g/mol, preferably 100,000 to 200,000 g/mol; and/or,
the molecular weight polydispersity index of the polyester homopolymer is 1.0 to 3.0, preferably 1.4 to 2.9.

**6.** The polymer composition according to any one of claims 1 to 5, wherein the molecular weight distribution thereof is multimodal, wherein the polyester graft copolymer is a polyglycolic acid graft copolymer and the polyester homopolymer is a polyglycolic acid homopolymer; wherein the polyglycolic acid graft copolymer is represented by formula (I):

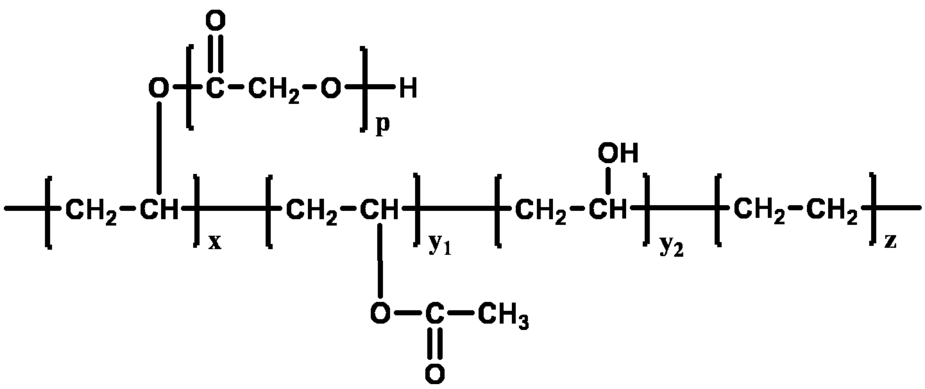

Formula (I);

in formula (I), x, $y_1$, $y_2$, z and p each independently represent the degree of polymerization, wherein x and p each independently represent a number greater than zero, and $y_1$, $y_2$ and z each independently represent zero or a number greater than zero.

**7.** The polymer composition according to claim 1 or 6, wherein the sum of x, $y_1$, $y_2$ and z is not less than 50, preferably 50-6000, more preferably 200-2500; and/or

p is not less than 40, preferably not less than 50, more preferably 70-2000; and/or,
the proportion of z to the sum of $x + y_1 + y_2 + z$ is 0% to 50%; and/or,
the proportion of $y_1$ to the sum of $x + y_1 + y_2$ is 0% to 32%.

**8.** The polymer composition according to claim 6 or 7, **characterized in that** the polyglycolic acid homopolymer is represented by formula (II):

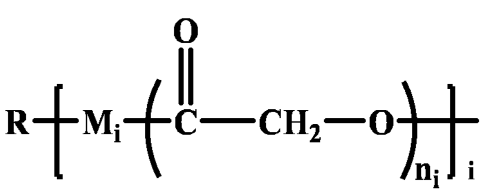

Formula (II);

in formula (II), $n_1$, ......, $n_i$ are each the degree of polymerization; i is the number of

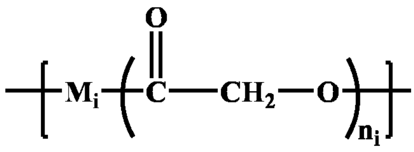

directly connected to R, i ≥1; $M_i$ is imino group (-NH-), nitrilo group

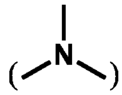

or ether bond (-O-); R is at least one of hydrogen, an aliphatic group or an aromatic group; and, when i > 1, $M_1$, $M_2$,..., $M_i$ are different from or the same as each other, and $n_1$, $n_2$, ..., $n_i$ are different from or the same as each other; and/or,

preferably, i is any integer between 1 and 20, and the preferred range of i is 1 to 6; the sum of all n values is 100 to 5000, preferably 1000 to 4000; and R is hydrogen and/or an alkyl or aromatic hydrocarbon group having a molecular weight of 14 to 1000 g/mol.

**9.** The polymer composition according to any one of claims 6 to 8, **characterized in that**:

relative to 100 parts by mass of the polyglycolic acid segment

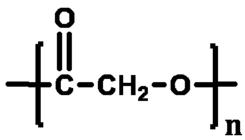
,

the polymer composition contains:

when the polyglycolic acid graft copolymer comprises a polyvinyl alcohol main chain, 0.001 to 5 parts by mass, preferably 0.005 to 3 parts by mass, preferably 0.005 to 1 parts by mass, more preferably 0.01 to 1s part by mass of

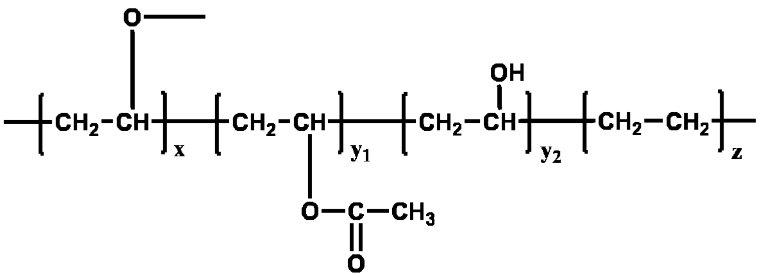
,

and/or when the polyglycolic acid graft copolymer comprises an ethylene-vinyl alcohol copolymer main chain, 0.001 to 10 parts by mass, preferably 0.002 to 8 parts by mass, preferably 0.005 to 7 parts by mass, more preferably 0.01 to 5 parts by mass of

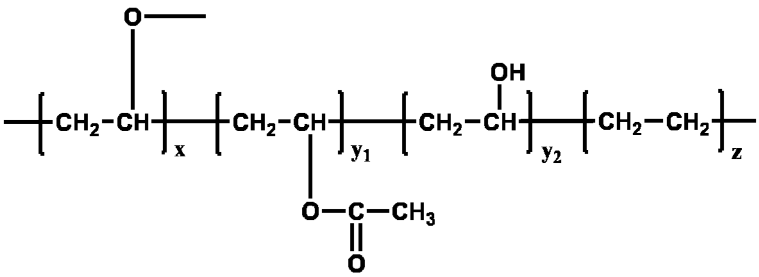
,

and
0.001 to 1 parts by mass, preferably 0.01 to 0.1 parts by mass of

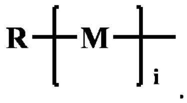

**10.** The polymer composition according to any one of claims 6 to 9, **characterized in that**:

the overall weight average molecular weight of the polymer composition is 180,000 to 1,500,000 g/mol, preferably 200,000 to 1,500,000 g/mol, preferably 250,000 to 500,000 g/mol; and/or,
the overall molecular weight polydispersity index of the polymer composition is 1.5 to 20.0, preferably 2.0 to 12.0, preferably 2.0 to 6.0, more preferably 2.0 to 3.5; and/or,
the peak number of the molecular weight distribution of the polymer composition is at least 2, preferably 2 to 4; and/or,
the weight average molecular weight of the polyglycolic acid graft copolymer is 500,000 to 10,000,000 g/mol, preferably 1,000,000 to 6,000,000 g/mol; and/or,
the molecular weight polydispersity index of the polyglycolic acid graft copolymer is 1.0 to 3.0, preferably 1.1 to 1.5; and/or,
the weight average molecular weight of the polyglycolic acid homopolymer is 50,000 to 350,000 g/mol, preferably 100,000 to 200,000 g/mol; and/or,
the molecular weight polydispersity index of the polyglycolic acid homopolymer is 1.0 to 3.0, preferably 1.4 to 2.9.

**11.** The polymer composition according to any one of claims 6 to 10, **characterized in that**:

relative to the total mass of the polyglycolic acid graft copolymer and the polyglycolic acid homopolymer, the content of the polyglycolic acid graft copolymer is 0.1 mass% to 80.0 mass%, preferably 0.5 mass% to 55.0 mass%, and more preferably 1.0 mass% to 30.0 mass%; and the content of the polyglycolic acid homopolymer is 20 mass% to 99.9 mass%, preferably 45.0 mass% to 99.5 mass%, and more preferably 70.0 mass% to 99.0 mass%; and/or,
the melt flow rate of the polymer composition at 230°C/2.16 kg is not higher than 20.0 g/10 min, preferably 0.5 to 10.0 g/10 min; and/or,
the melt strength of the polymer composition at 235°C is not less than 5 cN, preferably not less than 8 cN, and not higher than 200 cN, preferably not higher than 100 cN.

**12.** A preparation method for the polymer composition according to any one of claims 1 to 11, comprising melt polymerizing a monomer for polyester, a macromolecular initiator and a small molecule initiator to provide the polymer composition.

**13.** The preparation method according to claim 12, **characterized in that**:

the monomer is selected from a hydroxy acid monomer or a derivative of a hydroxy acid monomer; preferably, the monomer is selected from a lactide monomer, a lactone monomer or a combination thereof; preferably, the lactide monomer is a lactide monomer based on α-hydroxy acid or β-hydroxy acid, more preferably the lactide monomer is selected from the group consisting of glycolide, lactide, butyrolactide, valerolactide, caprolactide and any combination thereof; preferably, the lactone monomer is selected from the group consisting of β-butyrolactone, δ-valerolactone, ε-caprolactone, β-propiolactone, β-valerolactone, γ-butyrolactone, γ-valerolactone, γ-octalactone, β-methyl-δ-valerolactone, δ-stearolactone, 2-methyl-ε-caprolactone, 4-methyl-ε-caprolactone, ε-octalactone, ε-palmitolactone and any combination thereof, more preferably the lactone monomer is selected from the group consisting of β-butyrolactone, δ-valerolactone, ε-caprolactone and any combination thereof; most preferably, the monomer is selected from the group consisting of methyl glycolate, glycolic acid, glycolide and any combination thereof; and/or,
the macromolecular initiator is at least one of polyvinyl alcohol and ethylene-vinyl alcohol copolymer; and/or,
the alcoholysis degree of the polyvinyl alcohol is 68% to 99%, and/or the degree of polymerization of the polyvinyl alcohol is 100-6000, preferably 300-2000; and/or the content of ethylene segments in the ethylene-vinyl alcohol copolymer is greater than 0 mol% to 50 mol%; and/or the degree of polymerization of the ethylene-vinyl alcohol copolymer is 50-6000, preferably 300-2000; and/or the melt flow rate of the ethylene-vinyl alcohol copolymer at

190°C/2.16 kg is 0.1-50 g/10 min; and/or,
the small molecule initiator is selected from the group consisting of water and/or a hydroxyl and/or amino group-containing small molecule compound with a boiling point greater than 160°C, preferably, the molecular weight of the hydroxyl and/or amino group-containing small molecule compound is not greater than 1000 g/mol; preferably 60-300 g/mol.

**14.** The preparation method according to any one of claims 12 to 13, **characterized in that**:

calculated as hydroxyl and relative to each gram of monomer, the content of hydroxyl contained by the macromolecular initiator is 0.1 μmol/g monomer to 1.5 mmol/g monomer, preferably 0.5 μmol/g monomer to 1.0 mmol/g monomer, more preferably 1.0 μmol/g monomer to 0.5 mmol/g monomer; and/or,
calculated as active hydrogen and relative to each gram of monomer, the content of active hydrogen contained by the small molecule initiator is 3.0 μmol/g monomer to 40.0 μmol/g monomer, preferably 10.0 μmol/g monomer to 30.0 μmol/g monomer; and/or,
calculated as active hydrogen and relative to each gram of monomer, the total content of active hydrogen contained by the macromolecular initiator and the small molecule initiator is 3.1 μmol/g monomer to 1.54 mmol/g monomer, preferably 10.5 μmol/g monomer to 1.03 mmol/g monomer, and more preferably 11.0 μmol/g monomer to 530.0 μmol/g monomer; and/or,
relative to 100 parts by mass of the monomer, the amount of the macromolecular initiator used is, when the macromolecular initiator is polyvinyl alcohol, 0.001 to 5 parts by mass, preferably 0.005 to 3 parts by mass, preferably 0.005 to 1 parts by mass, more preferably 0.01 to 1 parts by mass, and/or when the macromolecular initiator is ethylene-vinyl alcohol copolymer, 0.001 to 10 parts by mass, preferably 0.002 to 8 parts by mass, preferably 0.005 to 7 parts by mass, more preferably 0.01 to 5 parts by mass; and/or,
relative to 100 parts by mass of the monomer, the amount of the small molecule initiator used is 0.001 to 1 parts, preferably 0.01 to 0.1 parts.

**15.** The preparation method according to any one of claims 12 to 14, **characterized in that**:
the conditions of the melt polymerization include:

a temperature of 120 to 300°C, preferably 160 to 250°C, more preferably 200 to 240°C; and/or a reaction time of 0.5 to 60 min, preferably 1 to 10 min; and/or,
the melt polymerization being carried out in a melt mixing device; preferably, the melt polymerization is carried out in a continuous twin-screw extruding equipment; preferably, the polymerization reaction conditions of the continuous twin-screw extruding equipment include: a temperature of 180 to 250°C, preferably 210 to 240°C; and/or a screw rotation speed of 5 to 300 rpm, preferably 40 to 150 rpm; and/or a length to diameter ratio of 25 to 80, preferably 40 to 70.

**16.** The preparation method according to any one of claims 12 to 15, **characterized in that**:
the melt polymerization is carried out in at least two twin-screw extruding equipments connected in series, preferably the polymerization reaction conditions of each twin-screw extruding equipment connected in series include:
a temperature of 180-250°C, preferably 210-240°C; and/or a screw rotation speed of 5-300 rpm, preferably 40-150 rpm; and/or a length to diameter ratio of 25-80, preferably 40-70.

**17.** The preparation method according to any one of claims 12 to 16, wherein the melt polymerization is carried out in the presence of a catalyst and an optional antioxidant; preferably, the catalyst is a salt compound of at least one of Groups IIA to VA metal elements and transition metal elements or an organic guanidine catalyst; more preferably, the catalyst is a salt compound of at least one of Sn, Bi, Mg, Al, Ca, Fe, Mn, Ti and Zn, and further preferably a Sn salt; and/or

the amount of the catalyst used is 0.005 to 1 parts by mass, preferably 0.01 to 0.2 parts by mass, relative to 100 parts by mass of the monomer; and/or,
the amount of the antioxidant used is 0 to 2 parts by mass, preferably 0.01 to 1 parts by mass, relative to 100 parts by mass of the monomer.

**18.** A polymer composition prepared by the preparation method according to any one of claims 12 to 17.

**19.** An article comprising the polymer composition according to any one of claims 1 to 11, wherein the article is selected from the group consisting of films, rods, tubes, wires, sheets, irregularly shaped parts, and any combination thereof.

**20.** The article according to claim 19, wherein the article is a film, preferably the film is a multilayer composite film, wherein at least one layer of the multilayer composite film comprises the polymer composition according to any one of claims 1 to 11;

preferably, the multilayer composite film comprises a barrier layer, a protective layer and a tie layer, wherein the protective layer is the outer layer, the tie layer is located between the barrier layer and the protective layer, and the barrier layer comprises the polymer composition according to any one of claims 1 to 11; and/or,
the oxygen transmission rate (OTR) of the multilayer composite film at 23 ± 0.5°C and relative humidity 65% ± 5% is not greater than 100 $cm^3/(m^2 \cdot day \cdot atm)$, preferably not greater than 30 $cm^3/(m^2 \cdot day \cdot atm)$; and/or,
the water vapor transmission rate (WVTR) of the multilayer composite film at 38 ± 0.5°C and relative humidity 90% ± 5% is not greater than 30 $g/(m^2 \cdot day \cdot atm)$, preferably not greater than 15 $g/(m^2 \cdot day \cdot atm)$; and/or,
the heat sealing strength of the multilayer composite film is not less than 3 N/15 mm, preferably not less than 5 N/15 mm; and/or,
the interlaminar peeling strength of the multilayer composite film is not less than 0.5 N/15 mm, preferably not less than 1.5 N/15 mm.

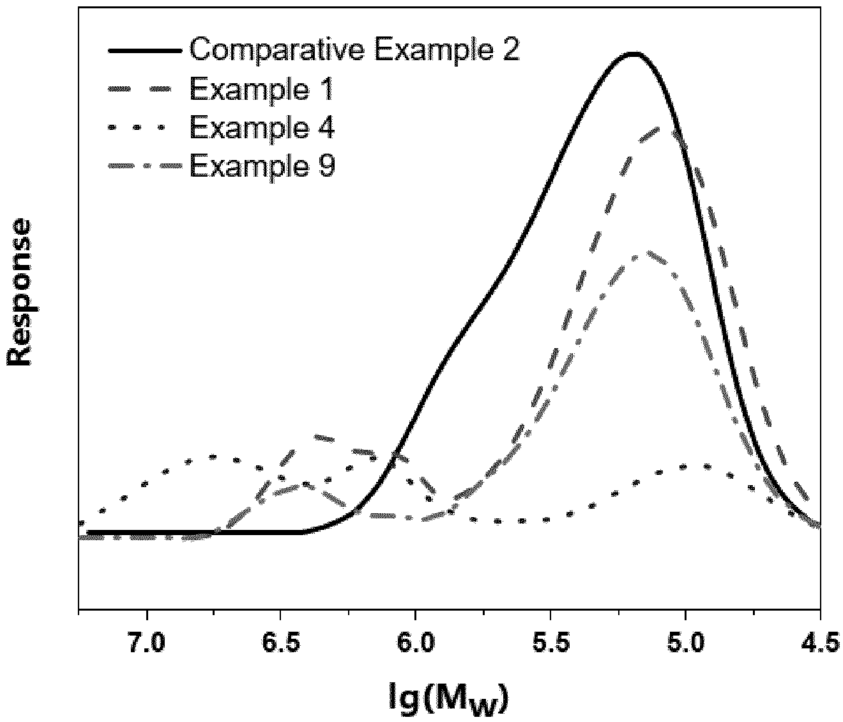
Comparative Example 2
Example 1
Example 4
Example 9
Response
7.0
6.5
6.0
5.5
5.0
4.5
lg(M_W)

FIG.1

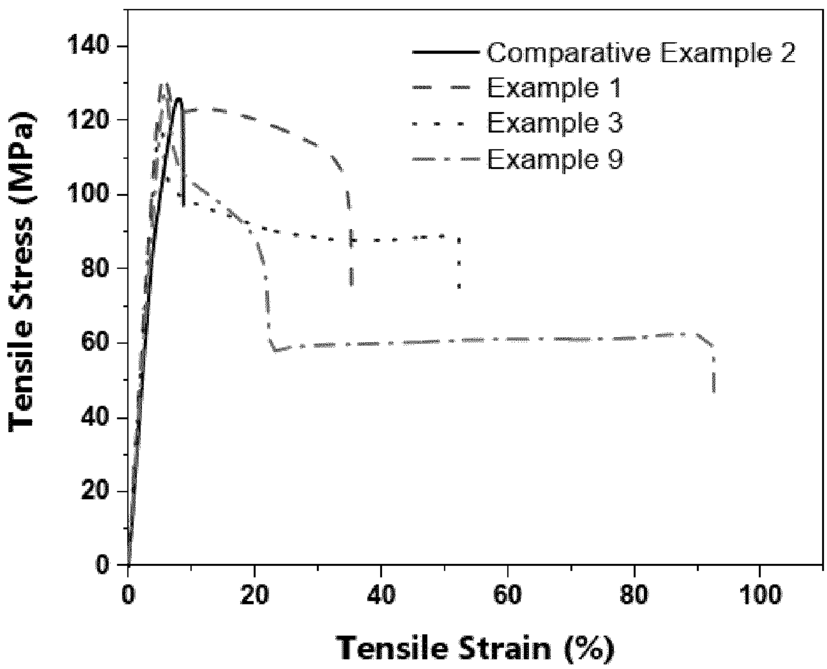
Comparative Example 2
Example 1
Example 3
Example 9
Tensile Stress (MPa)
140
120
100
80
60
40
20
0
0
20
40
60
80
100
Tensile Strain (%)

FIG.2

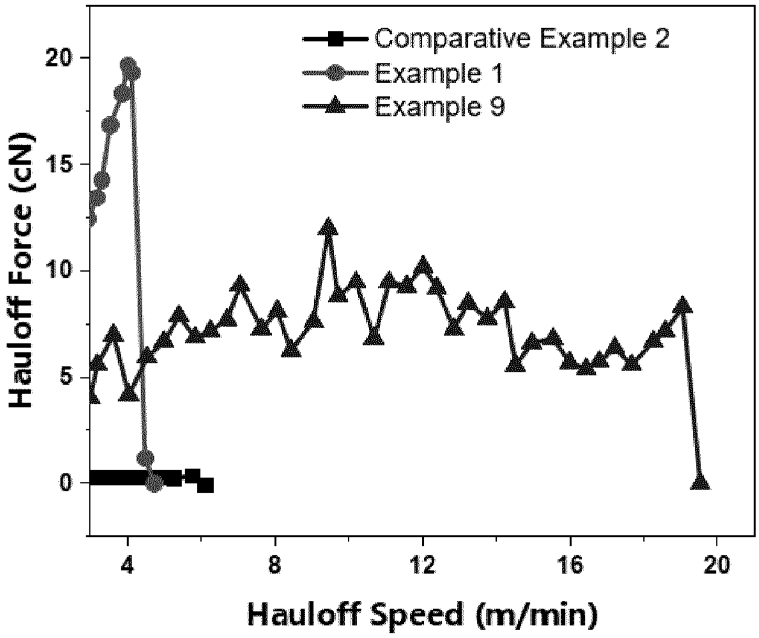
Comparative Example 2
Example 1
Example 9
Hauloff Force (cN)
Hauloff Speed (m/min)
0
5
10
15
20
4
8
12
16
20

FIG.3

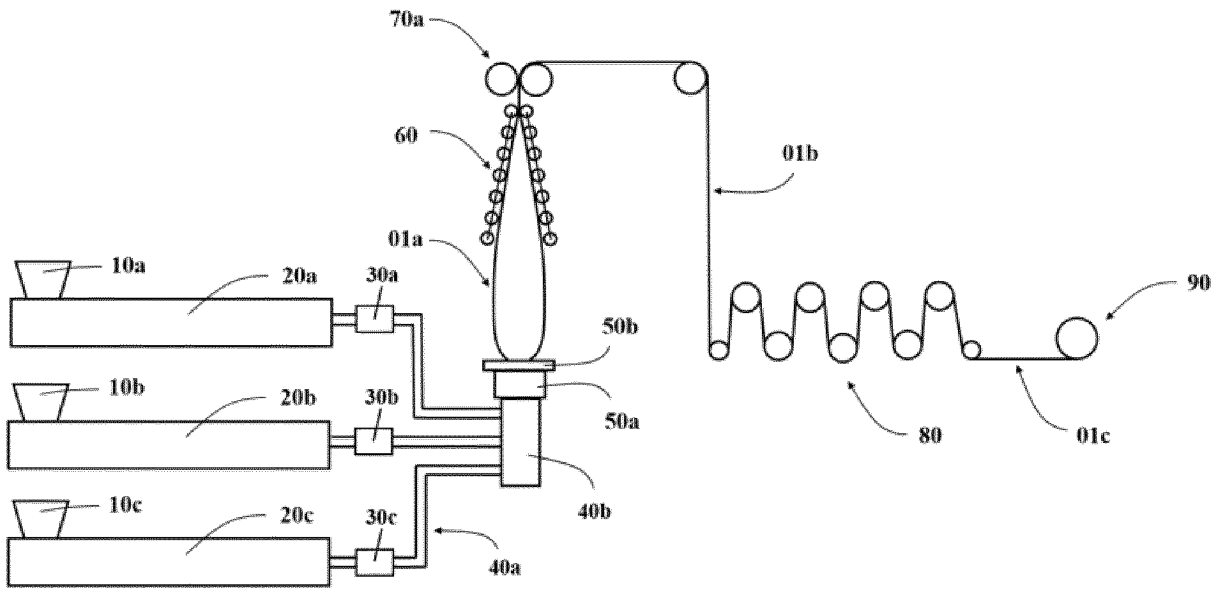
70a
60
01a
01b
10a
20a
30a
50b
50a
10b
20b
30b
10c
20c
30c
40b
40a
80
01c
90

FIG.4

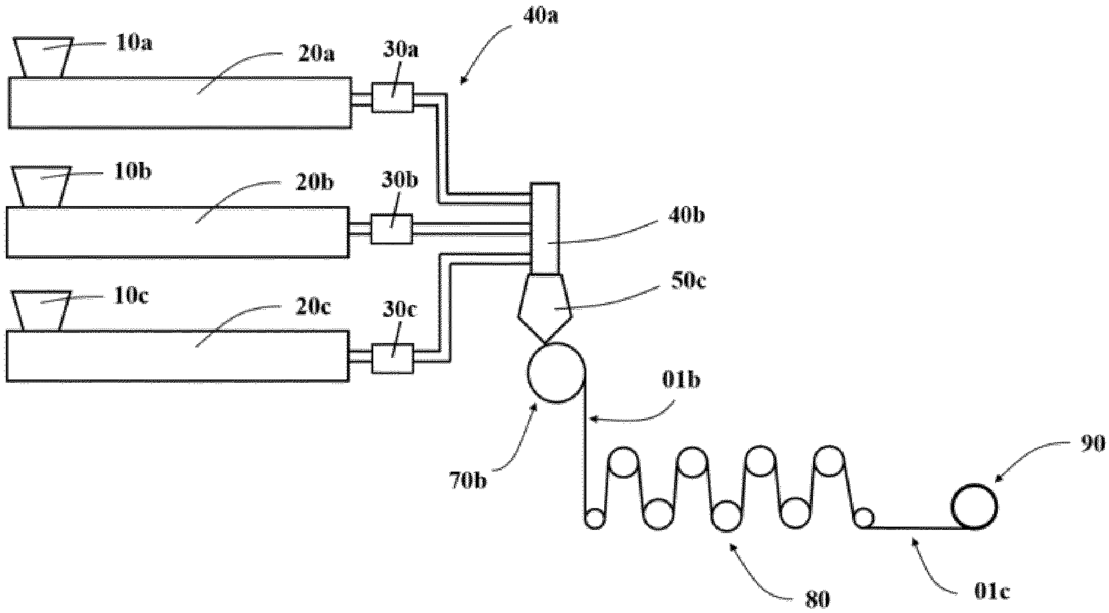
40a
10a
20a
30a
10b
20b
30b
40b
10c
20c
30c
50c
01b
70b
90
80
01c

FIG.5

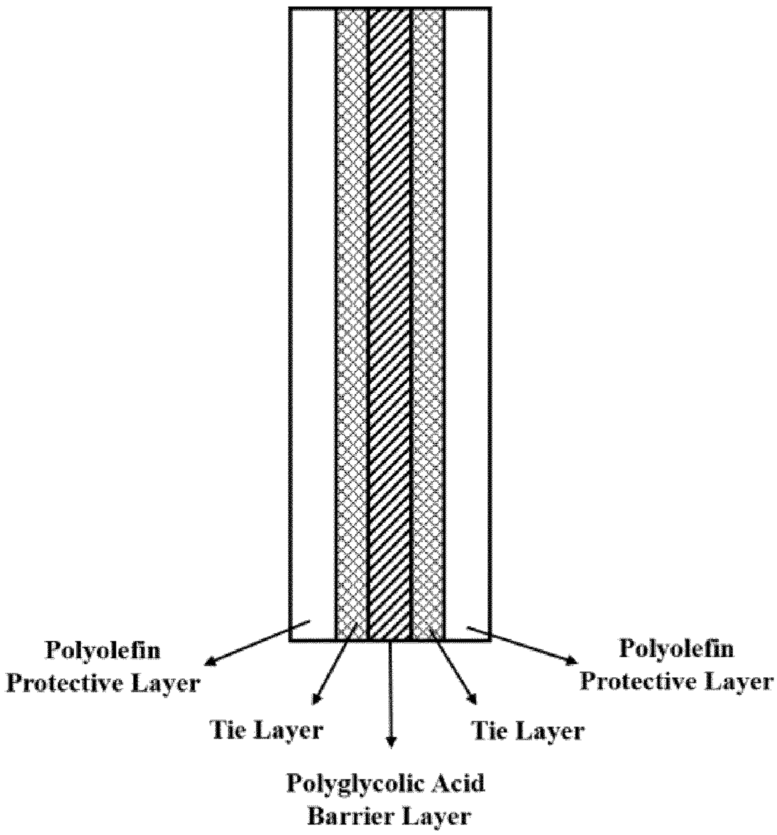
Polyolefin Protective Layer
Polyolefin Protective Layer
Tie Layer
Tie Layer
Polyglycolic Acid Barrier Layer

FIG.6

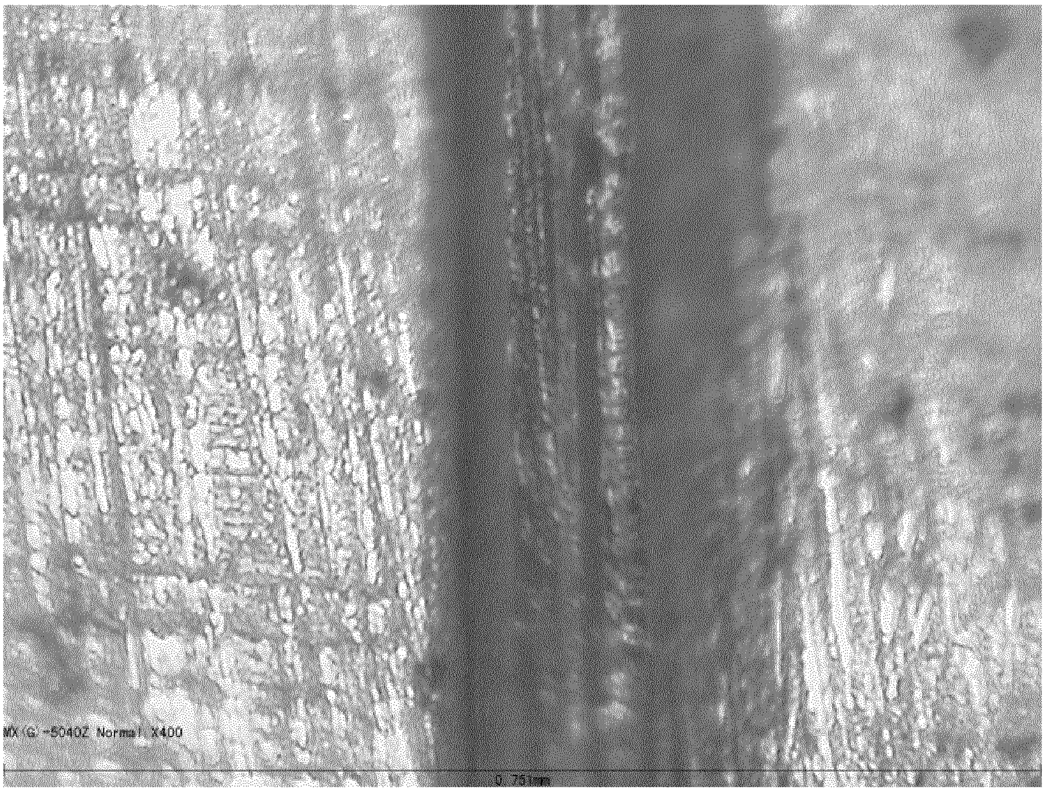
Normal X400
0.751mm

FIG.7

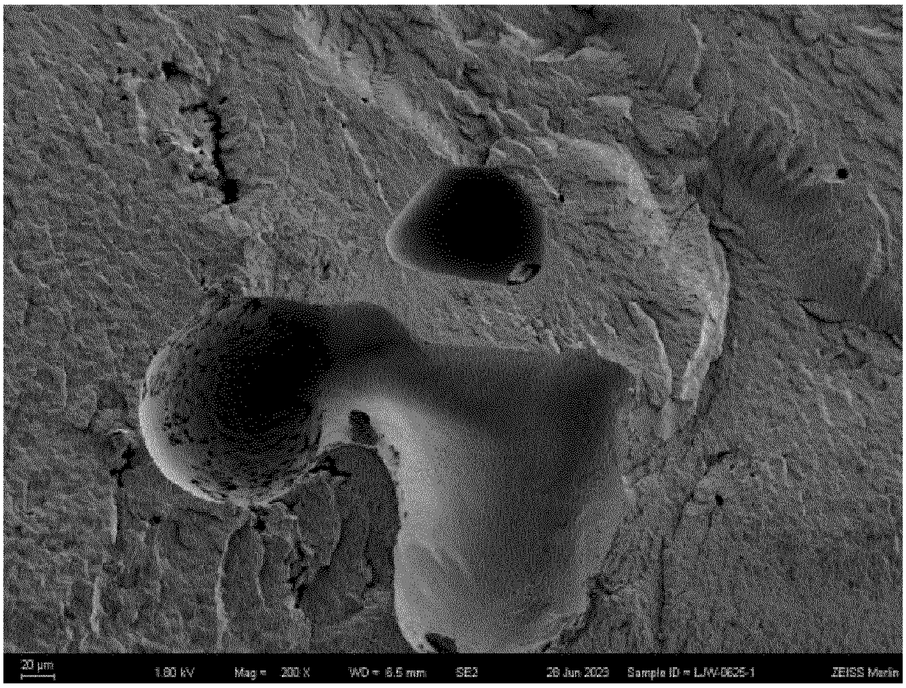
20 µm
1.00 kV
Mag = 200 X
WD = 6.5 mm
SE2
28 Jun 2023
Sample ID = LJW-0625-1
ZEISS Merlin

FIG.8

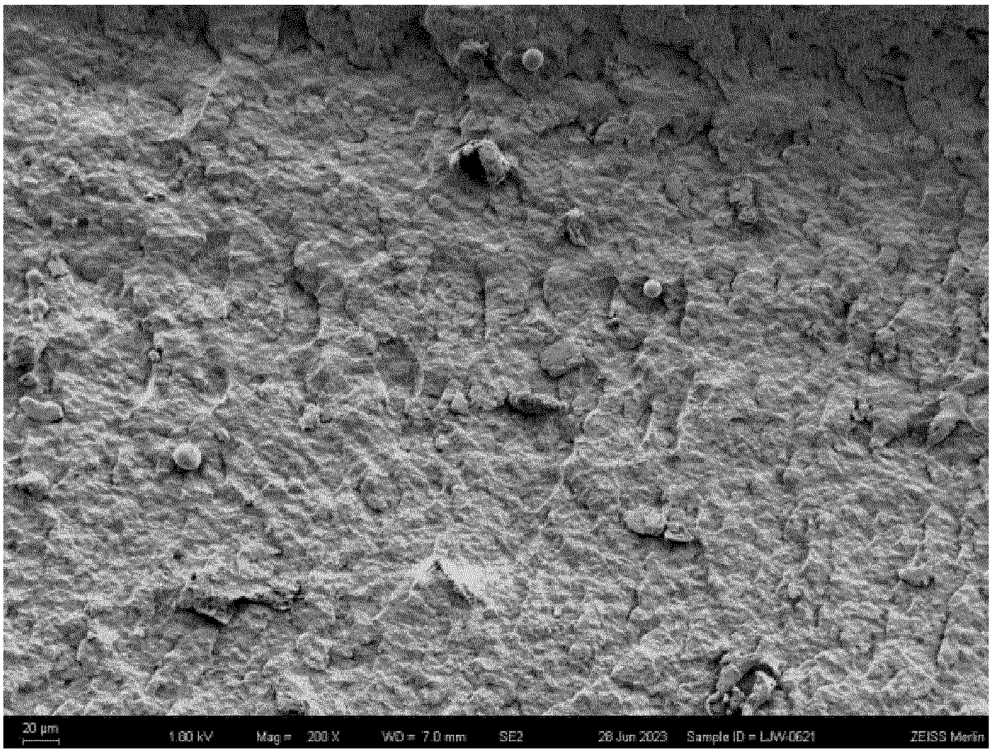
20 µm
1.00 kV
Mag = 200 X
WD = 7.0 mm
SE2
28 Jun 2023
Sample ID = LJW-0621
ZEISS Merlin

FIG.9

## INTERNATIONAL SEARCH REPORT

International application No.
**PCT/CN2023/113482**

**A. CLASSIFICATION OF SUBJECT MATTER**

C08L67/04(2006.01)i；C08G63/02(2006.01)i；C08G63/06(2006.01)i；C08G63/08(2006.01)i

According to International Patent Classification (IPC) or to both national classification and IPC

**B. FIELDS SEARCHED**

Minimum documentation searched (classification system followed by classification symbols)

IPC：C08L67/-,C08G63/-

Documentation searched other than minimum documentation to the extent that such documents are included in the fields searched

Electronic data base consulted during the international search (name of data base and, where practicable, search terms used)

CNKI, CNTXT, ENTXTC, DWPI: 接枝共聚物, 均聚物, 聚乙醇酸, 羟基酸, 乙交酯, 丙交酯, 丁交酯, 戊交酯, 己交酯, 丁内酯, 戊内酯, 己内酯, 丙内酯, 戊内酯, 丁内酯, 戊内酯, 辛内酯, 硬脂内酯, 棕榈内酯, 聚乙烯醇, 乙烯-乙烯醇共聚物, PVA, EVOH, graft copolymer, homopolymer, polyglycolic acid, hydroxyacid, glycolide, lactide, butyrolide, valerolide, caprolide, butyrolactone, valerolactone, caprolactone, propiolactone, valerolactone, butyrolactone, valerolactone, octolactone, stearyllactone, palmitolactone, polyvinyl alcohol, ethylene-vinyl alcohol copolymer

**C. DOCUMENTS CONSIDERED TO BE RELEVANT**

| Category* | Citation of document, with indication, where appropriate, of the relevant passages | Relevant to claim No. |
|---|---|---|
| Y | US 2009131602 A1 (KUREHA CORP.) 21 May 2009 (2009-05-21)<br>description, paragraphs [0001], [0006]-[0007], [0012]-[0022], [0029], and [0035] | 1-20 |
| Y | WO 2006097656 A1 (JEAN MONNET UNIVERSITY et al.) 21 September 2006 (2006-09-21)<br>the claims, description, page 13, line 23 to page 14, line 25 and embodiments 1-3 | 1-20 |
| A | CN 101089027 A (EAST CHINA UNIVERSITY OF SCIENCE AND TECHNOLOGY) 19 December 2007 (2007-12-19)<br>entire document | 1-20 |
| A | CN 114075376 A (CHN ENERGY INVESTMENT GROUP CO., LTD. et al.) 22 February 2022 (2022-02-22)<br>entire document | 1-20 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 October 2023** | **23 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/113482**

**C. DOCUMENTS CONSIDERED TO BE RELEVANT**

| Category* | Citation of document, with indication, where appropriate, of the relevant passages | Relevant to claim No. |
|---|---|---|
| A | CN 114163791 A (CHN ENERGY INVESTMENT GROUP CO., LTD. et al.) 11 March 2022 (2022-03-11)<br>entire document | 1-20 |
| A | CN 114478932 A (CHINA PETROLEUM & CHEMICAL CORPORATION et al.) 13 May 2022 (2022-05-13)<br>entire document | 1-20 |
| A | US 2021388154 A1 (PUJING CHEMICAL INDUSTRY CO., LTD.) 16 December 2021 (2021-12-16)<br>entire document | 1-20 |

Form PCT/ISA/210 (second sheet) (July 2022)

**INTERNATIONAL SEARCH REPORT**
**Information on patent family members**

International application No.
**PCT/CN2023/113482**

| Patent document cited in search report | Publication date (day/month/year) | Patent family member(s) | Publication date (day/month/year) |
|---|---|---|---|
| US 2009131602 A1 | 21 May 2009 | JPWO 2007049721 A1 | 30 April 2009 |
| | | JP 5224815 B2 | 03 July 2013 |
| | | WO 2007049721 A1 | 03 May 2007 |
| | | US 8304500 B2 | 06 November 2012 |
| | | EP 1950247 A1 | 30 July 2008 |
| | | EP 1950247 A4 | 22 September 2010 |
| WO 2006097656 A1 | 21 September 2006 | FR 2883290 A1 | 22 September 2006 |
| CN 101089027 A | 19 December 2007 | None | |
| CN 114075376 A | 22 February 2022 | None | |
| CN 114163791 A | 11 March 2022 | None | |
| CN 114478932 A | 13 May 2022 | None | |
| US 2021388154 A1 | 16 December 2021 | AU 2018447432 A1 | 27 May 2021 |
| | | CA 3116445 A1 | 07 May 2020 |
| | | JP 2023123769 A | 05 September 2023 |
| | | JP 2022512906 A | 07 February 2022 |
| | | WO 2020087216 A1 | 07 May 2020 |
| | | EP 3873972 A1 | 08 September 2021 |
| | | EP 3873972 A4 | 27 July 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 111647144 A
- CN 112513133 A
- GB 104022006 T
- GB 88081988 A